(19) Europäisches Patentamt
European Patent Office
Office européen des brevets

(11) **EP 1 711 868 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**06.01.2016  Patentblatt 2016/01**

(45) Hinweis auf die Patenterteilung:
**07.05.2008  Patentblatt 2008/19**

(21) Anmeldenummer: **04805035.5**

(22) Anmeldetag: **27.12.2004**

(51) Int Cl.:
**C21D 11/00** [(2006.01)]  **G05B 17/02** [(2006.01)]
**B21B 37/74** [(2006.01)]

(86) Internationale Anmeldenummer:
**PCT/EP2004/053709**

(87) Internationale Veröffentlichungsnummer:
**WO 2005/076092 (18.08.2005 Gazette 2005/33)**

(54) **RECHNERGESTÜTZTES MODELLIERVERFAHREN FÜR DAS VERHALTEN EINES STAHLVOLUMENS MIT EINER VOLUMENOBERFLÄCHE**

COMPUTER-ASSISTED MODELLING METHOD FOR THE BEHAVIOUR OF A STEEL VOLUME HAVING A  SURFACE

PROCÉDÉ DE MODÉLISATION ASSISTÉ PAR ORDINATEUR POUR LE COMPORTEMENT D'UN VOLUME D'ACIER PRÉSENTANT UNE SURFACE

(84) Benannte Vertragsstaaten:
**AT BE DE FI FR**

(30) Priorität: **06.02.2004  DE 102004005919**

(43) Veröffentlichungstag der Anmeldung:
**18.10.2006  Patentblatt 2006/42**

(73) Patentinhaber: **Primetals Technologies Germany GmbH**
**91052 Erlangen (DE)**

(72) Erfinder:
• **FRANZ, Klaus**
**90455 Nürnberg (DE)**
• **WEINZIERL, Klaus**
**90480 Nürnberg (DE)**
• **BORCHERS, Wolfgang**
**91056 Erlangen (DE)**

(74) Vertreter: **Metals@Linz**
**Primetals Technologies Austria GmbH**
**Turmstraße 44**
**4031 Linz (AT)**

(56) Entgegenhaltungen:
EP-A- 0 997 203        DE-A1- 10 129 565
DE-A1- 19 963 185      DE-B3- 10 251 716
JP-A- 58 199 613

• VISINTIN A: "MATHEMATICAL MODELS OF SOLID-SOLID PHASE TRANSITIONS IN STEEL" IMA JOURNAL OF APPLIED MATHEMATICS, ACADEMIC PRESS, LONDON,, GB, Bd. 39, Nr. 2, 1987, Seiten 143-157, XP008009060 ISSN: 0272-4960
• K. GREVEN ET AL.: 'Macroscopic Modeling of the Microstructural Evolution in Castings using Thermodynamic Formulated Phase Diagrams', 1998, B.G. THOMAS AND C. BECKERMANN TMS Seiten 187 - 1994

EP 1 711 868 B2

**Beschreibung**

Die vorliegende Erfindung betrifft ein rechnergestütztes Modellierverfahren für das Verhalten eines Stahlvolumens mit einer Volumenoberfläche,

a) wobei ein Rechner anhand eines momentanen Anfangszustands des Stahlvolumens und mindestens einer über die Volumenoberfläche auf das Stahlvolumen einwirkenden momentanen Einflussgröße durch Lösen einer Wärmeleitungsgleichung und einer Phasenumwandlungsgleichung einen Folgezustand des Stahlvolumens ermittelt,

b) wobei die mindestens eine Einflussgröße für eine Anzahl von Flächenelementen der Volumenoberfläche jeweils einen lokalen Einfluss umfasst und die lokalen Einflüsse über das jeweilige Flächenelement auf das Stahlvolumen einwirken,

c) wobei der Anfangszustand und der Folgezustand für eine Anzahl von Volumenelementen des Stahlvolumens jeweils lokale Anteile von modellierten Phasen des Stahls und eine einen lokalen Energieinhalt des Stahls beschreibende Größe umfassen,

d) wobei die modellierten Phasen des Stahls Austenit und eine erste weitere Phase umfassen,

e) wobei die erste weitere Phase Ferrit oder Zementit ist.

Ein derartiges Modellierverfahren ist z. B. aus der DE-A-101 29 565 bekannt. Bei dieser Schrift wird insbesondere erstmals versucht, die Fouriersche Wärmeleitungsgleichung selbst und nicht eine unkorrekte Abwandlung dieser Wärmeleitungsgleichung zu lösen, um das thermodynamische Verhalten eines Stahlbandes korrekt zu beschreiben. Diese Schrift wird hiermit durch Verweis auf sie in den Offenbarungsgehalt der vorliegenden Erfindung mit aufgenommen. In der älteren, zum Anmeldezeitpunkt der vorliegenden Erfindung nicht vorveröffentlichten deutschen Patentanmeldung 102 51 716.9 ist ebenfalls ein derartiges Modellierverfahren beschrieben. Bei diesem Modellierverfahren wird versucht, die Phasenumwandlung des Stahls anhand der Gibbsschen freien Enthalpien des Stahls zu modellieren. Auch diese Schrift wird hiermit durch Verweis auf sie in den Offenbarungsgehalt der vorliegenden Erfindung mit aufgenommen.

Weiterhin ist ein derartiges Modellierverfahren z. B. aus dem Aufsatz "Numerische Simulation der Wärmeleitung in Stahlblechen - Mathematik hilft bei der Steuerung von Kühlstrecken" von W. Borchers et al., veröffentlicht im Unikurier der Friedrich-Alexander-Universität Erlangen-Nürnberg, Heft 102, Oktober 2001, 27. Jahrgang, bekannt.

Schließlich sind noch die traditionellen Ansätze gemäß der Scheilschen Regel, nach Johnson-Mehl-Avrami und Brimacombe bekannt.

Bereits die exakte Modellierung des zeitlichen Temperaturverlaufs von Stahl bei der Abkühlung, insbesondere von Stahlbändern, ist entscheidend für die Steuerung der erforderlichen Wasser- bzw. Kühlmittelmengen einer Kühlstrecke für Stahl. Denn die beim Abkühlen auftretende Stahlumwandlung beeinflusst entscheidend das thermische Verhalten des Stahls bei der Abkühlung. Auch werden durch den Abkühlprozess wesentliche Materialeigenschaften des Stahls beeinflusst. Da die Abkühlung aber nicht im thermodynamischen Gleichgewicht erfolgt, ist es nicht möglich, die Umwandlung einfach durch geeignete Anpassung der Wärmekapazität zu beschreiben. Daher ist zusätzlich eine exakte Modellierung der Phasenumwandlung des Stahls erforderlich, um die Kühlstrecke korrekt steuern zu können.

Die traditionellen Ansätze des Standes der Technik arbeiten in der Praxis nicht in allen Fällen fehlerfrei. Insbesondere weisen sie eine Reihe von systematischen Nachteilen auf. Zum Ersten muss jedes Material separat parametriert werden. Interpolationen zwischen verschiedenen Materialien sind nicht oder zumindest nur eingeschränkt möglich. Zum Zweiten werden bei den traditionellen Verfahren des Standes der Technik nur zwei Phasen betrachtet. Eine Erweiterung auf mehr als zwei Phasen ist systembedingt nicht möglich. Zum Dritten liefern die Verfahren des traditionellen Standes der Technik nur bei einer vollständigen Umwandlung des betrachteten Metalls eine gute Übereinstimmung zwischen Modell und Realität. Zum Vierten liefern die Verfahren des traditionellen Standes der Technik keine Information über die bei der Phasenumwandlung freigesetzte Umwandlungswärme. Die Kenntnis der Umwandlungswärme ist für ein korrektes Lösen der Wärmeleitungsgleichung aber unabdingbar.

Die Vorgehensweisen gemäß der DE-A-101 29 565 und dem Fachaufsatz "Numerische Simulation ..." stellen dem gegenüber bereits einen erheblichen Fortschritt dar, da sie zumindest die Wärmeleitung völlig korrekt beschreiben. Die ältere deutsche Patentanmeldung verbessert darüber hinaus die Modellierung der Phasenumwandlung. Insbesondere liefert sie bereits die bei der Phasenumwandlung auftretende Umwandlungswärme. Auch diese Verfahren sind aber noch verbesserungsfähig.

Die Aufgabe der vorliegenden Erfindung besteht darin, ein Modellierverfahren für ein Metall zu schaffen, das bessere Modellergebnisse liefert.

Die Aufgabe wird dadurch gelöst,

f) dass der Anfangszustand und der Folgezustand für mindestens eines der Volumenelemente auch eine lokale Konzentrationsverteilung mindestens eines im Stahl beweglichen Legierungselements umfassen,

g) dass im Rahmen der Umwandlungsgleichung für das mindestens eine Volumenelement ermittelt wird, welche Konzentrationen des mindestens einen beweglichen Legierungselements beidseits einer ersten Phasengrenze zwischen Austenit und der ersten weiteren Phase vorliegen,

h) dass durch Lösen eines ersten Stefan-Problems ermittelt wird, ob und wie sich die Konzentrationsverteilung des mindestens einen beweglichen Legierungselements im austenitischen Bereich des betrachteten Volumenelements ändert und ob und um welches Ausmaß sich die erste Phasengrenze dadurch verschiebt,

i) dass die lokalen Anteile der Phasen anhand einer durch das Ausmaß der Verschiebung der ersten Phasengrenze bestimmten Lage der ersten Phasengrenze ermittelt werden,

j) dass das Modellierverfahren online und in Echtzeit ausgeführt wird,

k) dass der Rechner anhand einer aus dem Anfangszustand ermittelten Anfangsgröße und einer gewünschten Folgegröße die Einflussgröße ermittelt,

l) dass der Rechner eine Beeinflussungseinrichtung derart ansteuert, dass das Stahlvolumen entsprechend der ermittelten Einflussgröße beeinflusst wird,

m) dass das Modellierverfahren nach den Merkmalen a) bis l) iterativ angewendet wird und

n) dass der Anfangszustand jeder weiteren Iteration dem unmittelbar zuvor ermittelten Folgezustand entspricht.

Das in Stahl bewegliche Legierungselement ist in der Regel Kohlenstoff. Alternativ oder zusätzlich ist es aber auch möglich, dass das Legierungselement Stickstoff ist. Es kann auch ein anderes Legierungselement sein, das in Stahl bevorzugt an Zwischengitterplätzen angeordnet ist.

Bereits dieses Modellierverfahren ermöglicht gegenüber dem bisher bekannten Stand der Technik einen deutlichen Fortschritt. Denn mit dieser Vorgehensweise kann - je nach dem, ob die weitere Phase Ferrit oder Zementit ist - das Umwandlungsverhalten von Austenit in Ferrit bzw. von Austenit in Zementit und umgekehrt sehr realitätsgetreu modelliert werden.

Vorzugsweise umfassen die modellierten Phasen des Stahls auch eine zweite weitere Phase, in die Austenit umwandelbar ist und die in Austenit umwandelbar ist. Denn dann ist es insbesondere möglich,

- dass für das betrachtete Volumenelement im Rahmen der Umwandlungsgleichung auch ermittelt wird, welche Konzentrationen des mindestens einen beweglichen Legierungselements beidseits einer zweiten Phasengrenze zwischen Austenit und der zweiten weiteren Phase vorliegen,
- dass durch zusätzliches Lösen eines zweiten Stefan-Problems ermittelt wird, ob und wie sich die Konzentrationsverteilung des mindestens einen beweglichen Legierungselements im austenitischen Bereich des betrachteten Volumenelements ändert und ob und um welches Ausmaß sich die zweite Phasengrenze dadurch verschiebt,
- dass die Stefan-Probleme miteinander gekoppelt sind,
- dass den Phasengrenzen Flächenmaße zugeordnet sind,
- dass ein Anteil des der zweiten Phasengrenze zugeordneten Flächenmaßes an der Summe der Flächenmaße bestimmt wird und
- dass die lokalen Anteile der Phasen auch vom Anteil des der zweiten Phasengrenze zugeordneten Flächenmaßes an der Summe der Flächenmaße abhängen.

Mit dieser Vorgehensweise ist nicht nur die Umwandlung zwischen Austenit auf der einen Seite und Ferrit oder Zementit auf der anderen Seite sehr realitätsgetreu beschreibbar, sondern insbesondere auch die Umwandlung von Austenit in Perlit und umgekehrt. Es ist somit das gesamte wesentliche Umwandlungsverhalten von Stahl in festem Zustand korrekt beschreibbar. Ferner ist mit dieser Vorgehensweise ermittelbar, ob Perlit gebildet wird oder nicht.

Der Anteil des der zweiten Phasengrenze zugeordneten Flächenmaßes an der Summe der Flächenmaße kann derart bestimmt werden, dass die Phasengrenzen stets nebeneinander angeordnet bleiben. Alternativ ist es aber auch möglich, diesen Anteil derart nachzuführen, dass die Phasengrenzen aufeinander zu streben. Anhand dieses Anteils kann dann auch abgeleitet werden, ob Austenit nur in die erste weitere Phase, nur in die zweite weitere Phase oder sowohl in die erste als auch in die zweite weitere Phase umgewandelt wird.

Prinzipiell ist es möglich, die Ausbildung der ersten Phasengrenze dreidimensional zu ermitteln. Dies fordert aber einen erheblichen Rechenaufwand. Vorzugsweise wird daher die Rechnung eindimensional vorgenommen. Dies ist einfacher möglich, wenn das Volumenelement ein raumfüllender aristotelescher Körper, insbesondere ein Quader, ist. Es ist also vorzugsweise so,

- dass das betrachtete Volumenelement quaderförmig ausgebildet ist und drei Grundabmessungen aufweist,
- dass die erste Phasengrenze als Rechteck mit einer ersten Längsseite und einer ersten Querseite ausgebildet ist und
- dass die erste Längsseite mit einer ersten der Grundabmessungen korrespondiert, die erste Querseite parallel zu einer zweiten der Grundabmessungen verläuft und Verschiebungen der ersten Phasengrenze parallel zu der dritten der Grundabmessungen erfolgen.

Bei Berücksichtigung auch der zweiten weiteren Phase ist es dann so,

- dass die zweite Phasengrenze als Rechteck mit einer zweiten Längsseite und einer zweiten Querseite ausgebildet ist und
- dass die zweite Längsseite mit der ersten der Grundabmessungen korrespondiert, die zweite Querseite parallel zur zweiten der Grundabmessungen verläuft und Verschiebungen der zweiten Phasengrenze parallel zur dritten der Grundabmessungen erfolgen.

Wenn die Summe der Querseiten der Phasengrenzen ungefähr gleich dem 1,5- bis 3-fachen eines kritischen Lamellenabstandes ist, bei dem eine Energiebilanz, die einerseits mit dem Verschieben der Phasengrenzen korrespondierende Phasenumwandlungen des Stahls und andererseits mit dem Verschieben der Phasengrenzen korrespondierende Änderungen der Fläche einer Grenzschicht zwischen der ersten und der zweiten weiteren Phase berücksichtigt, ausgeglichen ist, kann mittels des Modells auch der Lamellenabstand des Perlits ermittelt werden. Der Lamellenabstand (das heißt die Summe der Querseiten der Phasengrenzen) kann dabei insbesondere in etwa gleich dem Doppelten des kritischen Lamellenabstands sein.

Trotz der nur eindimensionalen Rechnung liefert das erfindungsgemäße Modellierverfahren sehr realitätsgetreue Ergebnisse, wenn der Anteil an Austenit anhand einer nicht linearen Funktion der Lage der Phasengrenze bzw. der Phasengrenzen ermittelt wird.

Wenn die Ermittlung, in welchen Konzentrationen das mindestens eine bewegliche Legierungselement beidseits der ersten Phasengrenze bzw. beidseits der ersten und beidseits der zweiten Phasengrenze vorliegt, anhand der Gibbsschen freien Enthalpien der Phasen erfolgt, ist die Ermittlung der Konzentrationen des mindestens einen beweglichen Legierungselements an den Phasengrenzen besonders einfach.

Es ist möglich, stets die gekoppelten Stefan-Probleme zu lösen und daraus abzuleiten, welche Phasen in welchem Umfang gebildet werden. In manchen Fällen ist dies sogar unumgänglich. Manchmal ist es aber möglich, vor dem Lösen der Phasenumwandlungsgleichung anhand der im Anfangszustand bereits vorhandenen Phasen und anhand der Gibbsschen freien Enthalpien vorab zu ermitteln, ob sowohl Austenit als auch die erste weitere Phase vorliegen bzw. ob zusätzlich zu Austenit und der ersten weiteren Phase auch die zweite weitere Phase vorliegt.

Im Einzelfall kann die Anzahl von Volumenelementen klein sein. Im Extremfall ist sie gleich Eins. In aller Regel umfasst das Stahlvolumen aber eine Vielzahl von Volumenelementen. Wenn das Stefan-Problem bzw. die Stefan-Probleme nur für einen Teil der Volumenelemente gelöst wird bzw. werden und die lokalen Anteile der Phasen der anderen Volumenelemente anhand der lokalen Anteile der Phasen des Teils der Volumenelemente ermittelt werden, kann daher die zum Modellieren des Verhaltens des Stahlvolumens erforderliche Rechenleistung deutlich reduziert werden, ohne die Aussagekraft der Modellrechnung wesentlich zu verschlechtern. Die Wärmeleitungsgleichung hingegen wird in aller Regel individuell für jedes Volumenelement gelöst.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung

FIG 1    eine Kühlstrecke für ein Stahlband,
FIG 2    das Stahlband von FIG 1 im Detail,
FIG 3    ein Volumenelement in perspektivischer Darstellung,
FIG 4    ein Ablaufdiagramm,
FIG 5    ein weiteres Ablaufdiagramm,
FIG 6    eine Wärmeleitungsgleichung und eine Phasenumwandlungsgleichung,
FIG 7    eine weitere Wärmeleitungsgleichung und eine Phasenumwandlungsgleichung,
FIG 8    ein weiteres Ablaufdiagramm,
FIG 9    die Gibbsschen freien Enthalpien der Phasen des Stahls als Funktion des Kohlenstoffanteils bei einer ersten Temperatur,
FIG 10   die Gibbsschen freien Enthalpien als Funktion des Kohlenstoffanteils des Stahls bei einer zweiten Temperatur,
FIG 11   ein Volumenelement in perspektivischer Darstellung,
FIG 12   das Volumenelement von FIG 11 in der Seitenansicht,

FIG 13    ein Volumenelement analog dem von FIG 12,

FIG 14    ein Volumenelement in perspektivischer Darstellung,

FIG 15    das Volumenelement von FIG 14 in der Draufsicht,

FIG 16    das Volumenelement von FIG 15 im Schnitt gemäß der Linie XVI - XVI von FIG 15,

FIG 17    das Volumenelement von FIG 15 im Schnitt gemäß der Linie XVII - XVII von FIG 15,

FIG 18    ein weiteres Ablaufdiagramm und

FIG 19    ein Detail von FIG 15.

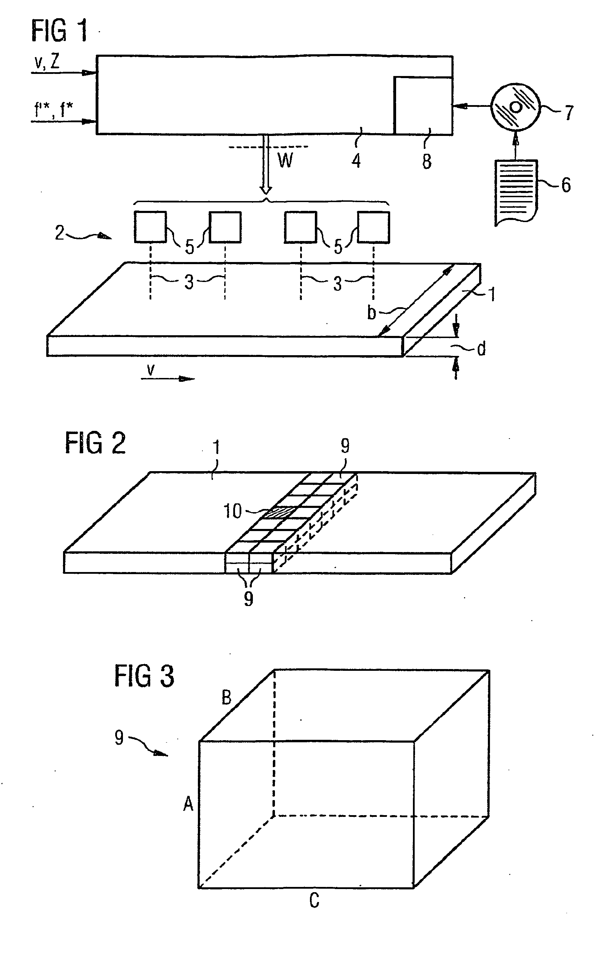

Gemäß FIG 1 soll z. B. ein Stahlband 1 gekühlt werden, damit es vorgegebene Endeigenschaften annimmt. Hierzu wird das Stahlband 1 z. B. in einer Kühlstrecke 2 mit einem Kühlmedium 3 - in der Regel Wasser - beaufschlagt.

Das Stahlband 1 weist eine Bandbreite b und eine Banddicke d auf. Es weist ferner eine - prinzipiell beliebige - Bandlänge auf. Es durchläuft die Kühlstrecke 2 mit einer Bandgeschwindigkeit v.

Die Bandgeschwindigkeit v wird kontinuierlich erfasst und einem Rechner 4 zugeführt, der die Kühlstrecke 2 steuert. Der Rechner 4 ist somit in der Lage, in an sich bekannter Weise eine Wegverfolgung des Stahlbandes 1 zu realisieren. Dem Rechner 4 ist also bekannt, auf welche Bereiche des Stahlbandes 1 eingewirkt wird, wenn das Stahlband 1 mittels Aufbringungseinrichtungen 5 der Kühlstrecke 2 mit dem Kühlmedium 3 beaufschlagt wird.

Der Rechner 4 ist mit einem Computerprogramm 6 programmiert, das dem Rechner 4 über einen Datenträger 7, z. B. eine CD-ROM 7, zugeführt wird. Auf dem Datenträger 7 ist das Computerprogramm 6 in (ausschließlich) maschinenlesbarer Form gespeichert. Das Computerprogramm 6 wird vom Rechner 4 übernommen und in einem Massenspeicher 8, z. B. einer Festplatte 8, des Rechners 4 hinterlegt. Dadurch ist der Rechner 4 in der Lage, bei Aufruf des Computerprogramms 6 ein Modellierverfahren für das Stahlband 1 bzw. für dessen einzelne Bereiche (= das Stahlvolumen 1) auszuführen, das nachfolgend näher beschrieben wird.

Gemäß FIG 2 wird hierzu das Stahlvolumen 1 innerhalb des Rechners 4 in Volumenelemente 9 zerlegt. Soweit ein Volumenelement 9 dabei nicht allseitig von anderen Volumenelementen 9 umgeben ist, sind dem jeweiligen Volumenelement 9 ein oder zwei Flächenelemente 10 zugeordnet. Die Flächenelemente 10 bilden in ihrer Gesamtheit eine Volumenoberfläche des Stahlbandes 1 bzw. des betrachteten Bereichs des Stahlbandes 1.

Der Rechner 4 realisiert auf Grund der Programmierung mit dem Computerprogramm 6 insbesondere ein Modell, in dem für jedes Volumenelement 9 die thermischen Kopplungen mit seiner Umgebung berücksichtigt sind. Jedes Volumenelement 9 ist dabei - siehe FIG 3 - quaderförmig ausgebildet. Es weist also drei Grundabmessungen A, B, C auf, die in der Regel parallel zur Richtung der Bandgeschwindigkeit v, zur Bandbreite b und zur Banddicke d orientiert sind.

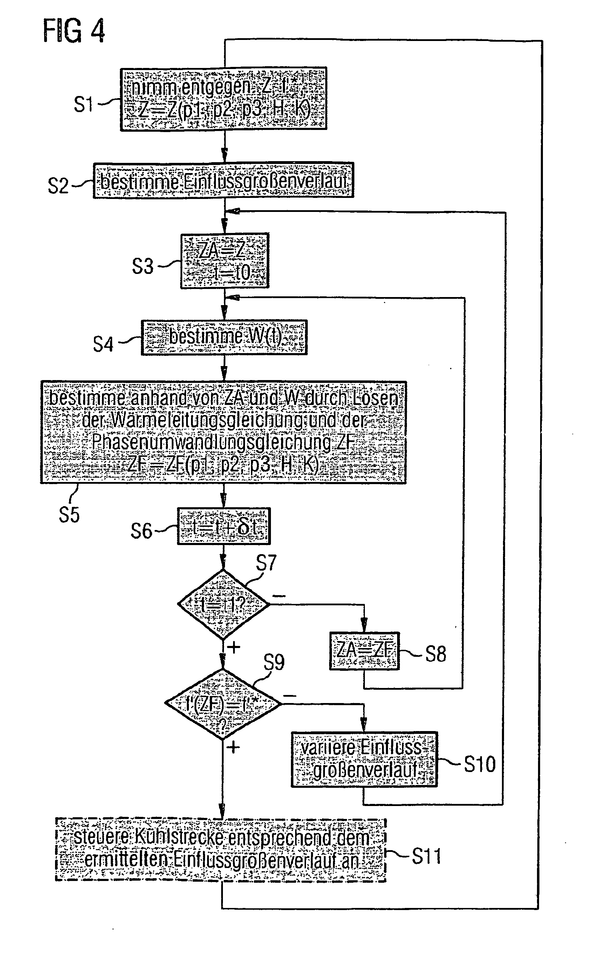

In einer Ausgestaltung des Modellierverfahrens,die als solche nicht Gegenstand der vorliegenden Erfindung ist, wird dem Rechner 4 gemäß FIG 4 in einem Schritt S1 ein Erstzustand Z zugeführt. Der Erstzustand Z umfasst für jedes Volumenelement 9 des Stahlbandes 1 zunächst lokale Anteile $p1, p2, p3$ von modellierten Phasen des Stahls. Die Phasen können insbesondere Ferrit (Anteil $p1$), Zementit (Anteil $p2$) und Austenit (Anteil $p3$) sein.

Der Erstzustand Z umfasst weiterhin für jedes Volumenelement 9 des Stahlbandes 1 eine Größe H, die einen lokalen Energieinhalt des Stahls des Volumenelements 9 beschreibt. Beispielsweise kann diese Größe H die Enthalpie H des Volumenelements 9 sein. Alternativ kommen auch die Temperatur oder die Entropie in Frage.

Schließlich umfasst der Erstzustand Z für mindestens eines der Volumenelemente 9 des Stahlbandes 1, vorzugsweise für jedes Volumenelement 9 des Stahlbandes 1, noch eine lokale Konzentrationsverteilung K mindestens eines im Stahl beweglichen Legierungselements. Das bewegliche Legierungselement kann insbesondere Kohlenstoff sein. Alternativ oder zusätzlich kommt z. B. auch Stickstoff in Frage.

Dem Rechner 4 wird im Rahmen des Schrittes S1 weiterhin zumindest eine gewünschte Endgröße f'* zugeführt. Gegebenenfalls können dem Rechner 4 im Rahmen des Schrittes S1 auch noch gewünschte Zwischengrößen zugeführt werden, so dass dem Rechner 4 gegebenenfalls sogar ein gewünschter zeitlicher Verlauf der Größe vorgegeben werden kann.

Gemäß FIG 4 wird nun in einem Schritt S2 zunächst ein Einflussgrößenverlauf festgelegt. Der Einflussgrößenverlauf umfasst für eine Vielzahl von zeitlich unmittelbar aufeinanderfolgenden Zeitpunkten jeweils eine Einflussgröße W. Die Einflussgröße W entspricht beispielsweise der auf das Stahlvolumen 1 (also das Stahlband 1 bzw. dessen betrachteten Bereich) aufzubringenden Kühlmittelmenge unter Berücksichtigung anderer Einflüsse auf das Stahlvolumen 1, wie beispielsweise von Transportrollen, der Wärmekonvektion, der Wärmeabstrahlung usw.. Sie umfasst für die Vielzahl von Flächenelementen 10 des Stahlvolumens 1 (siehe FIG 2) jeweils einen lokalen Einfluss. Die lokalen Einflüsse wirken dann über das jeweilige Flächenelement 10 auf das Stahlvolumen 1 ein.

Gemäß FIG 4 wird nunmehr in einem Schritt S3 ein Anfangszustand ZA des Stahlvolumens 1 gleich dem Erstzustand Z und eine Zeitbasis t auf einen Anfangszeitpunkt t0 gesetzt. Der Anfangszeitpunkt t0 entspricht dabei in der Regel dem Zeitpunkt, zu dem das betrachtete Stahlvolumen 1, also z. B. ein Abschnitt des Stahlbandes 1, in die Kühlstrecke 2 eintritt.

Sodann wird in einem Schritt S4 anhand des Einflussgrößenverlaufs die zu dem durch die Zeitbasis t bestimmten Zeitpunkt aufzubringende Einflussgröße W ermittelt. In einem Schritt S5 ermittelt der Rechner 4 dann anhand des momentanen Anfangszustands ZA des Stahlvolumens 1 und der über die Volumenoberfläche auf das Stahlvolumen 1 einwirkenden momentanen Einflussgröße W einen Folgezustand ZF des Stahlvolumens 1. Der Rechner 4 löst dabei eine Wärmeleitungsgleichung und eine Phasenumwandlungsgleichung. Der Folgezustand ZF umfasst dieselben Elemente K, p1, p2, p3, H wie der Anfangszustand ZA.

Sodann wird in einem Schritt S6 die Zeitbasis t um eine zeitliche Schrittweite Δt inkrementiert. Als nächstes wird in einem Schritt S7 geprüft, ob die Zeitbasis t einen Endzeitpunkt t1 erreicht hat. Der Endzeitpunkt t1 entspricht dabei in der Regel dem Zeitpunkt, zu dem das betrachtete Stahlvolumen 1 die Kühlstrecke 2 wieder verlässt.

Wenn der Endzeitpunkt t1 noch nicht erreicht ist, wird in einem Schritt S8 der Anfangszustand ZA gleich dem unmittelbar zuvor ermittelten Folgezustand ZF gesetzt und sodann zum Schritt S4 zurückgesprungen.

Wenn hingegen der Endzeitpunkt t1 erreicht wurde, wird die aus den Schritten S4 bis S8 bestehende Schleife verlassen. Wenn danach keine weiteren Maßnahmen ergriffen werden, wird nur ein sogenannter Prozessbeobachter realisiert. Vorzugsweise aber wird, wie in FIG 4 dargestellt, in einem Schritt S9 anhand des nunmehr ermittelten Folgezustands ZA eine erwartete Endgröße f', z. B. die Temperatur oder die Materialhärte, ermittelt und mit der gewünschten Endgröße f'* verglichen. Wenn die erwartete Endgröße f' mit der gewünschten Endgröße f'* nicht korrespondiert, wird - die entsprechende Rechenleistung vorausgesetzt - in einem Schritt S10 der Verlauf der Einflussgröße W variiert. Sodann wird zum Schritt S3 zurückgesprungen. Anderenfalls ist der erforderliche Kühlmittelmengenverlauf ermittelt, so dass der Rechner 4 nunmehr die Kühlstrecke 2 in einem Schritt S11 entsprechend ansteuern kann.

Der Vollständigkeit halber sei dabei erwähnt, dass der Rechner 4, wenn ihm außer der gewünschten Endgröße f'* auch gewünschte Zwischengrößen vorgegeben werden, selbstverständlich den Kühlmittelmengenverlauf erst bis zu der ersten gewünschten Zwischengröße ermittelt, dann bis zur zweiten gewünschten Zwischengröße usw., bis der gesamte Kühlmittelmengenverlauf bis zur gewünschten Endgröße f'* ermittelt ist.

Gemäß den FIG 1 und 4 wird das obenstehend beschriebene Modellierverfahren online und in Echtzeit ausgeführt. Es ist aber selbstverständlich ohne Weiteres auch eine Offline-Ausführung möglich. Dies ist in FIG 1 dadurch angedeutet, dass die Verbindung der Kühlstrecke 2 mit dem Rechner 4 als öffenbare Verbindung angedeutet ist, also nicht unmittelbar eine Ansteuerung der Kühlstrecke 2 erfolgen muss. Weiterhin ist aus diesem Grund der Schritt S11 in FIG 4 nur gestrichelt eingezeichnet.

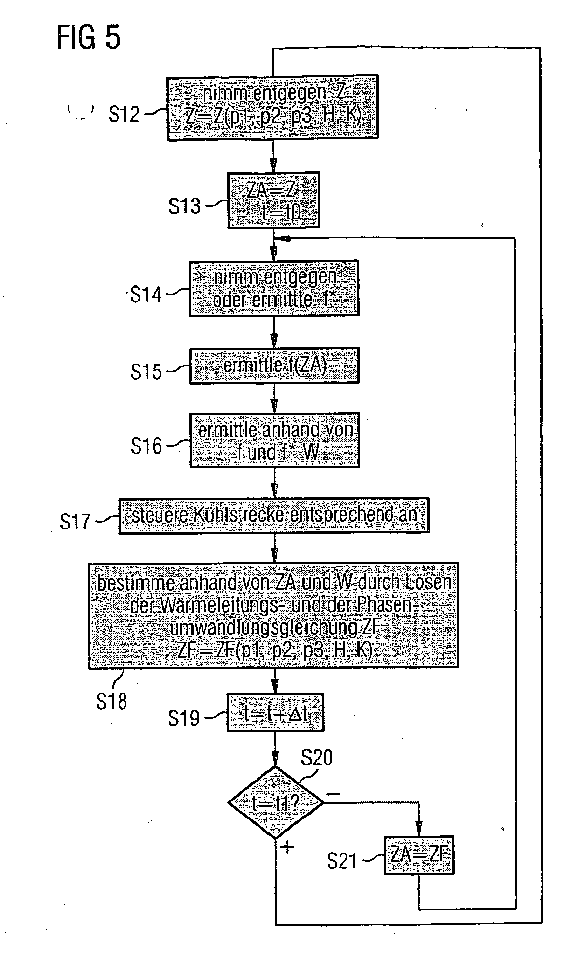

Die Vorgehensweise gemäß FIG 4 erfordert einen sehr hohen Rechenaufwand. Wenn die zur Ausführung des Verfahrens gemäß FIG 4 erforderliche Rechenleistung nicht zur Verfügung steht, aber dennoch eine Online-Steuerung unter Nutzung des erfindungsgemäßen Modellierverfahrens erfolgen soll, wird online und in Echtzeit ein erfindungsgemäßes Verfahren ausgeführt, das nachfolgend in Verbindung mit FIG 5 näher beschrieben wird.

Gemäß FIG 5 nimmt der Rechner 4 in einem Schritt S12 analog zum Schritt S1 den Erstzustand Z entgegen. In einem Schritt S13 setzt der Rechner 4 analog zum Schritt S3 den Anfangszustand ZA gleich dem Erstzustand Z und die Zeitbasis t auf den Zeitpunkt t0. Sodann ermittelt der Rechner 4 in einem Schritt S14 eine gewünschte Folgegröße f* oder nimmt sie entgegen.

In einem Schritt S15 ermittelt der Rechner 4 analog zum Schritt S9 anhand des Anfangszustands ZA eine Anfangsgröße f. Anhand der im Schritt S15 ermittelten Anfangsgröße f und der gewünschten Folgegröße f* ermittelt der Rechner 4 dann in einem Schritt S16 die Einflussgröße W. In einem Schritt S17, der mit dem Schritt S11 korrespondiert, steuert der Rechner 4 schließlich die Kühlstrecke 2 entsprechend der ermittelten Einflussgröße W an. Das Ansteuern erfolgt dabei, wie in FIG 5 dargestellt, vorzugsweise sofort. Gegebenenfalls kann aber auch ein Ansteuern im nächsten Zyklus erfolgen.

Die nachfolgenden Schritte S18 bis S21 korrespondieren mit den Schritten S5 bis S8 von FIG 4. Bezüglich dieser Schritte S18 bis S21 wird daher von einer detaillierten Erläuterung abgesehen.

Das Verfahren gemäß FIG 5 wird vorzugsweise z. B. bei einer Regelung eines die Kühlstrecke 2 durchlaufenden Stahlbandes 1 auf einen Verlauf der gewünschten Folgegröße f* eingesetzt. In diesem Fall muss das obenstehend in Verbindung mit FIG 5 beschriebene Verfahren selbstverständlich individuell für jeden einzelnen Abschnitt des Stahlbandes 1 ausgeführt werden. Auch muss für jeden Abschnitt jeweils diejenige der Aufbringungseinrichtungen 5 angesteuert werden, in deren Einflussbereich sich der betrachtete Abschnitt gerade befindet. Dies wird durch die eingangs erwähnte Wegverfolgung gewährleistet. Das Verfahren gemäß FIG 5 wird in diesem Fall ferner parallel für alle in der Kühlstrecke 2 befindlichen Abschnitte des Stahlbandes 1 ausgeführt.

Die jeweils gewünschte Folgegröße f* kann dem Rechner 4 explizit vorgegeben werden. Es ist aber auch möglich, dass dem Rechner 4 lediglich die gewünschte Folgegröße f* z. B. beim Austritt des Stahlbandes 1 aus der Kühlstrecke 2 oder beim Erreichen eines Haspels, auf den das Stahlband 1 aufgehaspelt wird, vorgegeben wird. In diesem Fall ermittelt der Rechner 4 selbsttätig anhand einer vorbestimmten Ermittlungsvorschrift die gewünschten Folgegrößen f* für die einzelnen Iterationen.

Die Regelung gemäß FIG 5 kann selbstverständlich auch anderweitig strukturiert werden, z. B. so, wie sie in der älteren DE 103 21 792.4 beschrieben ist.

Wie erwähnt, werden in den Schritten S5 und S18 eine Wärmeleitungsgleichung und eine Phasenumwandlungsgleichung gelöst.

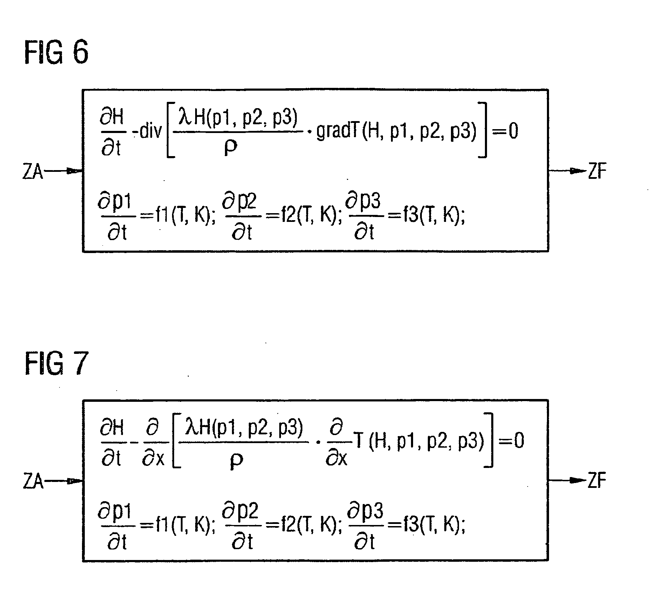

Ein Beispiel einer Wärmeleitungsgleichung und einer Phasenumwandlungsgleichung sind in FIG 6 dargestellt. Dort ist ein dreidimensionaler Ansatz für die Wärmeleitung getroffen. Bei Bändern kann dieser Ansatz in aller Regel aber auf den eindimensionalen Ansatz gemäß FIG 7 vereinfacht werden, da der Wärmefluss in Bandlängsrichtung und Bandquerrichtung in der Regel vernachlässigbar ist. $\partial/\partial x$ ist dabei die Ortsableitung in Banddickenrichtung.

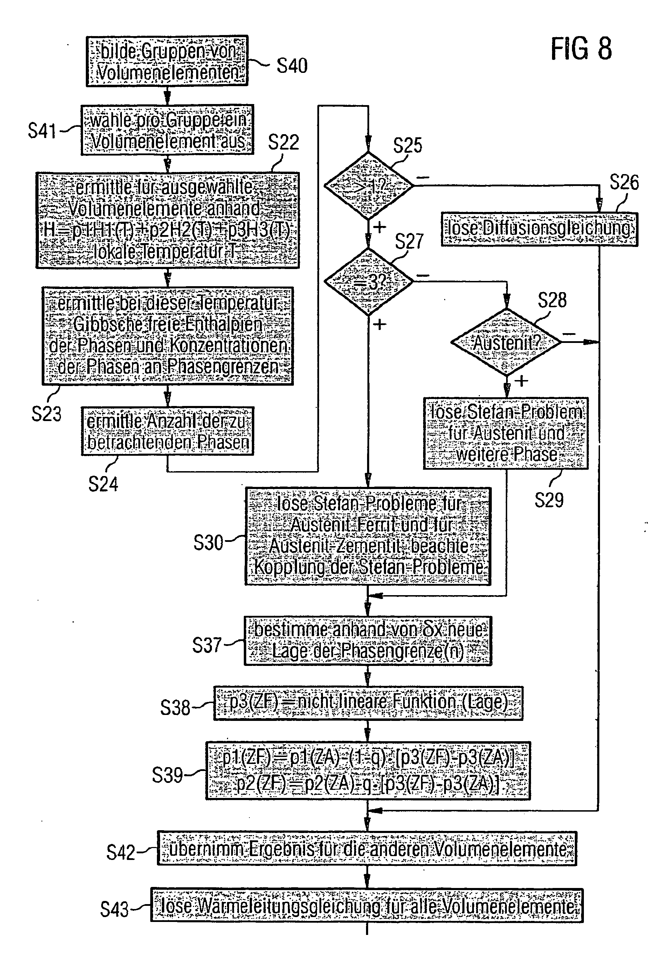

Ersichtlich sind die Wärmeleitungsgleichung und die Phasenumwandlungsgleichung miteinander gekoppelt. Zur Lösung der Wärmeleitungsgleichung und der Phasenumwandlungsgleichung (= Schritt S5, S18) wird daher gemäß FIG 8 wie folgt vorgegangen:

In einem Schritt S22 wird zunächst die lokale Temperatur T ermittelt. Die Ermittlung erfolgt anhand der Enthalpie H und der Anteile p1, p2, p3 der Phasen Ferrit, Zementit und Austenit. Auf Grund der geringen Größe des betrachteten Volumenelements 9 kann nämlich angenommen werden, dass die lokale Temperatur T innerhalb des Volumenelements 9 konstant ist. Damit weisen auch die Phasen des Stahls innerhalb dieses Volumenelements 9 dieselbe lokale Temperatur T auf. Die Enthalpie H des Volumenelements 9 lässt sich somit als

$$H = p1H1(T) + p2H2(T) + p3H3(T) \qquad (1)$$

schreiben. Da ferner für jede der Phasen die Enthalpien H1, H2 bzw. H3 der jeweiligen Phase als Funktion der lokalen Temperatur T - gegebenenfalls bei Austenit unter Berücksichtigung des Kohlenstoffanteils - eineindeutig bestimmt sind, lässt sich durch die Gleichung 1 die lokale Temperatur T ohne Weiteres ermitteln.

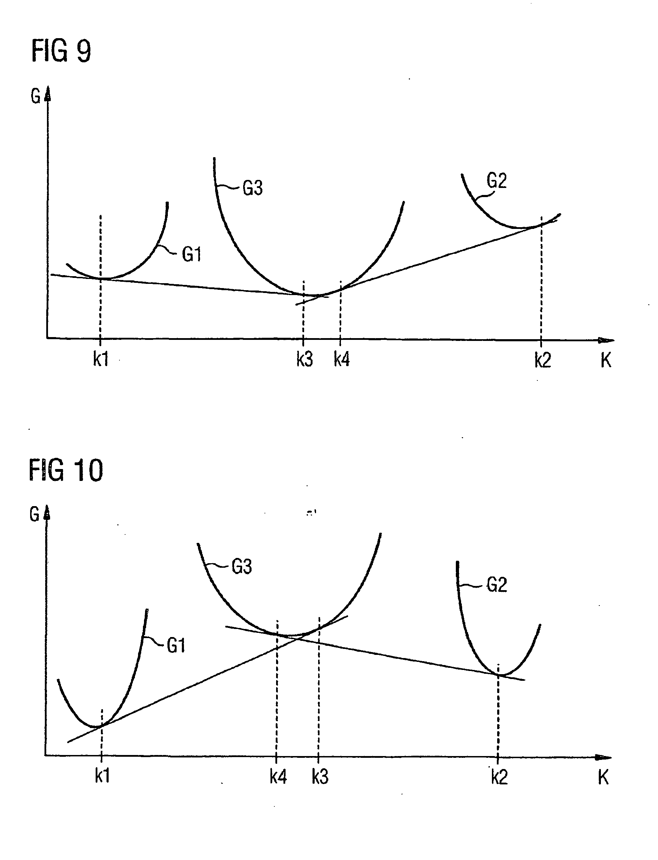

Für die im Schritt S22 ermittelte lokale Temperatur T werden dann in einem Schritt S23 - getrennt für die Phasen Ferrit, Zementit und Austenit - die Gibbsschen freien Enthalpien G1 bis G3 der einzelnen Phasen als Funktion des Anteils des beweglichen Legierungselements ermittelt. Beispiele derartiger Verläufe sind in den FIG 9 und 10 dargestellt. Bei dem Beispiel gemäß FIG 9 liegt die lokale Temperatur T dabei oberhalb der Umwandlungstemperatur von Austenit in Perlit, bei dem Beispiel gemäß FIG 10 darunter.

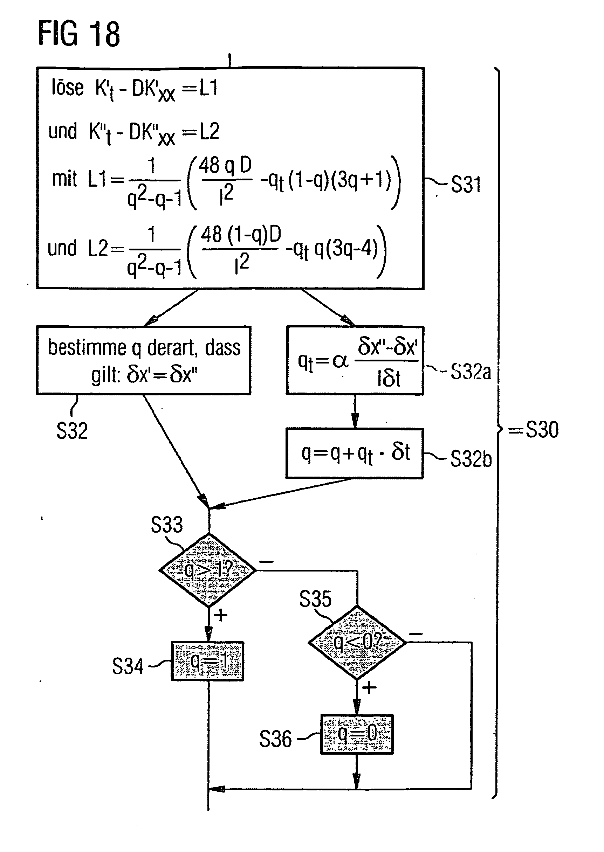

Es ist möglich, stets anzunehmen, dass alle drei Phasen Ferrit, Zementit und Austenit vorliegen und erst später - siehe die nachfolgenden Erläuterungen zu FIG 18 - zu entscheiden, welche Phasen vorliegen und welche Phasenumwandlungen erfolgen. Gemäß FIG 8 wird aber zunächst in einem Schritt S24 die Anzahl der zu betrachtenden Phasen ermittelt. Dies geschieht wie folgt:

Zunächst wird das System Ferrit-Austenit heraus gegriffen. Für dieses System wird überprüft, ob es bei dem im Volumenelement 9 vorhandenen Gesamtanteil des beweglichen Legierungselements rein ferritisch, rein austenitisch oder gemischt stabil ist und welche Phasenverteilung gegebenenfalls im stabilen Zustand vorliegt. Der Gesamtanteil des beweglichen Legierungselements kann anhand der Konzentrationsverteilung ohne Weiteres ermittelt werden.

Die Ermittlung der stabilen Phase(n) und gegebenenfalls der Phasenverteilung geschieht dadurch, dass versucht wird, ein Minimum für die gesamte Gibbssche freie Enthalpie G eines derartigen Systems zu ermitteln. Die konkrete Vorgehensweise ergibt sich dabei so, wie sie in den Seiten 16 bis 18 der älteren deutschen Patentanmeldung 102 51 716.9 beschrieben ist. Diese Vorgehensweise liefert zugleich auch Konzentrationen k1 und k3, in denen das bewegliche Legierungselement - typischerweise Kohlenstoff - an einer etwaigen Phasengrenze 11 zwischen Ferrit und Austenit im ferritischen bzw. im austenitischen Bereich gegebenenfalls vorliegt.

In analoger Weise werden sodann die Mischungssysteme Ferrit-Zementit (= Perlit) und Austenit-Zementit untersucht. Die Untersuchung des Mischungssystems Austenit-Zementit liefert dabei zugleich auch Konzentrationen k2 und k4, in denen das bewegliche Legierungselement an einer etwaigen Phasengrenze 12 zwischen Zementit und Austenit im zementitischen bzw. im austenitischen Bereich gegebenenfalls vorliegt.

Die drei für die drei Zweiphasen-Systeme ermittelten minimalen Gibbsschen freien Enthalpien G werden miteinander verglichen und das Zweiphasen-System mit der insgesamt minimalen Gibbsschen freien Enthalpie G herausgegriffen. Wenn dieses Zweiphasen-System Austenit enthält, lässt sich anhand der Gibbsschen freien Enthalpien ermitteln, ob der stabile Zustand eine oder zwei Phasen umfasst, welche Phase dies gegebenenfalls ist bzw. welche Phasen dies gegebenenfalls sind und welche Konzentrationen k1, k3 bzw. k2, k4 des beweglichen Legierungselements beidseits der Phasengrenze 11 von Austenit zu Ferrit bzw. der Phasengrenze 12 von Austenit zu Zementit jeweils vorliegen.

Aus dem Anfangszustand ZA ist ferner bekannt, welche Phasen anfänglich zu welchen Anteilen p1 bis p3 vorliegen.

Wenn das Zweiphasen-System mit der minimalen Gibbsschen freien Enthalpie G Austenit enthält, lässt sich also durch eine Zusammenschau der anfänglich vorliegenden Phasen und der als stabil ermittelten Phasen ermitteln, ob ein Reinsystem mit nur einer der Phasen Ferrit, Austenit und Zementit oder ein Mischsystem mit zwei oder sogar drei der Phasen Ferrit, Austenit und Zementit betrachtet werden muss. Auf Grund des Umstands, dass anhand der Gibbsschen freien Enthalpien G, G1 bis G3 auch ermittelbar ist, welche Phase stabil ist bzw. welche Phasen stabil sind, ist darüber hinaus auch die Richtung einer etwaigen Phasenumwandlung bereits bekannt.

Wenn das Zweiphasen-System mit der insgesamt minimalen Gibbsschen freien Enthalpie G das Perlitsystem ist und der Anfangszustand ZA kein Austenit enthält (p3 = 0), liegt ein vollständig umgewandeltes Gefüge, also ein Zweiphasen-System Ferrit-Zementit vor, das keiner Phasenumwandlung mehr unterliegt. Wenn hingegen der Anfangszustand ZA Austenit enthält (p3 > 0) und das Perlitsystem die minimale Gibbssche freie Enthalpie G aufweist, lässt sich nicht ohne Weiteres entscheiden, ob nun eine oder beide der Phasen Ferrit und Zementit gebildet werden. In diesem Fall wird daher vorläufig angenommen, dass beide Phasen gebildet werden, also ein Dreiphasensystem Ferrit-Zementit-Austenit zu betrachten ist.

In einem Schritt S25 wird als nächstes geprüft, ob in dem betrachteten Volumenelement 9 mehr als eine Phase vorliegt. Wenn dies nicht der Fall ist, erfolgt selbstverständlich keine Phasenumwandlung. Dennoch wird in einem Schritt S26 für dieses Volumenelement 9 eine Diffusionsgleichung für das bewegliche Legierungselement angesetzt und gelöst, um etwaige Konzentrationsschwankungen des beweglichen Legierungselements innerhalb des betrachteten Volumenelements 9 auszugleichen. Diese Vorgehensweise ist insbesondere bei Austenit, bei dem der Gehalt an Kohlenstoff stark schwanken kann, von Bedeutung. Der Ansatz und die Lösung einer derartigen Diffusionsgleichung ist Fachleuten allgemein bekannt. Auf den Ansatz der Diffusionsgleichung und deren Lösung wird daher nachstehend nicht näher eingegangen.

Wenn in dem betrachteten Volumenelement 9 mehr als eine Phase vorliegt, wird als nächstes in einem Schritt S27 abgeprüft, ob alle drei Phasen vorliegen. Wenn dies nicht der Fall ist, liegt ein Zweiphasen-System vor. In diesem Fall wird in einem Schritt S28 überprüft, ob eine der beiden vorliegenden Phasen Austenit ist. Wenn dies nicht der Fall ist, liegt ein vollständiges Perlit-System vor, also eine Schichtstruktur aus Ferrit und Zementit. Diese Struktur ist im Wesentlichen stabil. In diesem Fall müssen daher keine weiteren Maßnahmen ergriffen werden.

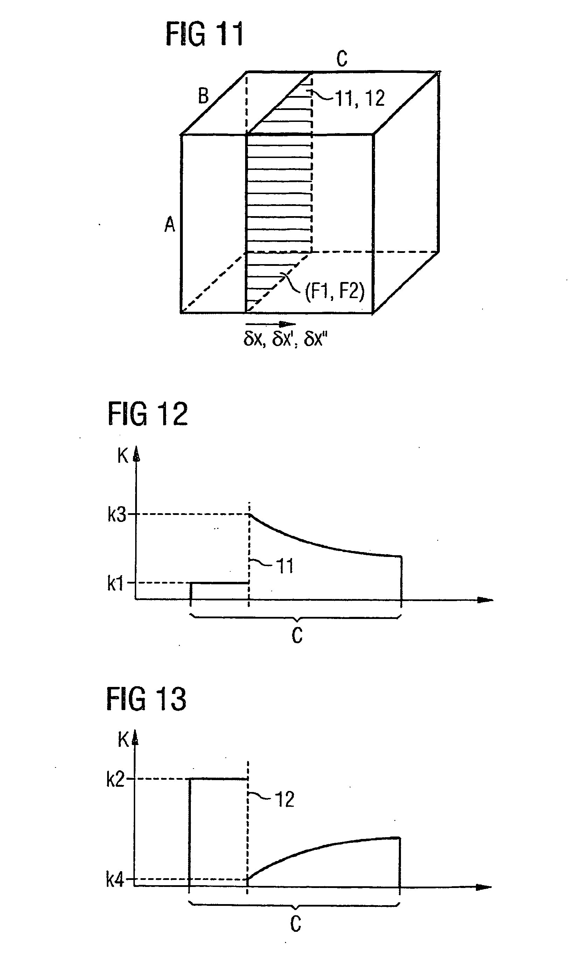

Wenn hingegen eine der Phasen Austenit ist und somit die andere Phase Ferrit oder Zementit, existiert eine Phasengrenze 11 zwischen Austenit und Ferrit (siehe FIG 11 und 12) oder eine Phasengrenze 12 zwischen Austenit und Zementit (siehe FIG 11 und 13). In diesem Fall wird als vereinfachende Maßnahme angenommen, dass die Phasengrenze 11 bzw. 12 als Rechteck ausgebildet ist, das eine Längsseite und eine Querseite aufweist. Die Längsseite und die Querseite des Rechtecks korrespondieren dabei mit den Grundabmessungen A und B des betrachteten Volumenelements 9. Verschiebungen der Phasengrenze 11, 12 erfolgen in diesem Fall, wie insbesondere aus FIG 11 ersichtlich ist, parallel zur Grundabmessung C.

Wie Fachleuten allgemein bekannt ist und auch aus FIG 12 ersichtlich ist, ist in Ferrit nur sehr wenig Kohlenstoff enthalten. An der Phasengrenze 11 zum austenitischen Bereich hingegen erfolgt ein Konzentrationssprung. Die Konzentrationen k1, k3, in denen das bewegliche Legierungselement an der Phasengrenze 11 vorliegt, sind dabei die Konzentrationen k1, k3, die obenstehend im Schritt S24 für das Ferrit-Austenit-System ermittelt wurden.

Wenn, wie in FIG 12 dargestellt, eine Umwandlung von Austenit in Ferrit erfolgen soll, muss der "Konzentrationsberg" des beweglichen Legierungselements im austenitischen Bereich in der Nähe der Phasengrenze 11 abdiffundieren. Umgekehrt muss, wenn eine Umwandlung von Ferrit in Austenit erfolgen soll, das "Konzentrationstal" des beweglichen Legierungselements im austenitischen Bereich in der Nähe der Phasengrenze 11 ständig aufgefüllt werden. Die numerische oder analytische Lösung dieser Aufgabe ist allgemein als Stefan-Problem bekannt. Sie erfolgt in einem Schritt S29. Das Stefan-Problem lässt sich im vorliegenden Fall wie folgt formulieren:

$$K'_t - DK'_{xx} = 0 \qquad\qquad (2)$$

D ist dabei die - gegebenenfalls temperaturabhängige - Diffusionskonstante des beweglichen Legierungselements im Austenit. K' ist die Konzentration K. Die Indizes t und x bedeuten die Ableitung nach der Zeit bzw. dem Ort in Verschieberichtung der Phasengrenze 11. Die Verschieberichtung der Phasengrenze 11 muss dabei nicht notwendigerweise die Banddickenrichtung sein.

Für die Gleichung 2 sind die Anfangsbedingungen durch die örtliche Konzentrationsverteilung K' des beweglichen Legierungselements im Anfangszustand ZA definiert. Beim Lösen des Stefan-Problems müssen dann nur noch die Randbedingungen betrachtet werden, dass im ferristischen bzw. im austenitischen Bereich an der Phasengrenze 11 die Konzentrationen k1 bzw. k3 vorliegen, dass das bewegliche Legierungselement das betreffende Volumenelement 9 nicht verlassen kann und dass sich die Verschiebung δx' der Phasengrenze 11 gemäß der Stefan-Bedingung zu

$$(k3 - k1)\delta x'/\delta t = -DK'_x \qquad\qquad (3)$$

ergibt, wobei δt die beim Lösen des Stefan-Problems benutzte zeitliche Schrittweite ist. Diese kann dabei ein Bruchteil (1/2, 1/3, 1/4 ...) der zeitlichen Schrittweite Δt oder aber gleich der zeitlichen Schrittweite Δt sein.

Durch Lösen des Stefan-Problems im Schritt S29 wird also ermittelt, ob und wie sich die Konzentrationsverteilung K bzw. K' des beweglichen Legierungselements im austenitischen Bereich des betrachteten Volumenelements 9 ändert. Zugleich wird dabei auch ermittelt, ob und um welches Ausmaß δx' sich die Phasengrenze 11 dadurch verschiebt.

Falls die weitere Phase nicht Ferrit, sondern Zementit ist, ergibt sich ein prinzipiell gleich gearteter Lösungsansatz und auch eine prinzipiell gleich geartete Lösung. Der Unterschied ist nur, dass bei der Bildung von Zementit im Zementit Kohlenstoff stark angereichert ist und im austenitischen Bereich in der Nähe der Phasengrenze 12 zum Zementit Kohlenstoff verarmt ist. Auch dies ist Fachleuten allgemein bekannt und in FIG 13 dargestellt. Es ändern sich also die Randbedingungen. Die Verschiebung δx" der Phasengrenze 11 gemäß der Stefan-Bedingung ergibt sich in diesem Fall zu

$$(k4 - k2)\delta x'' / \delta t = -DK''_x \qquad (4)$$

K" ist dabei wieder die Konzentration K.

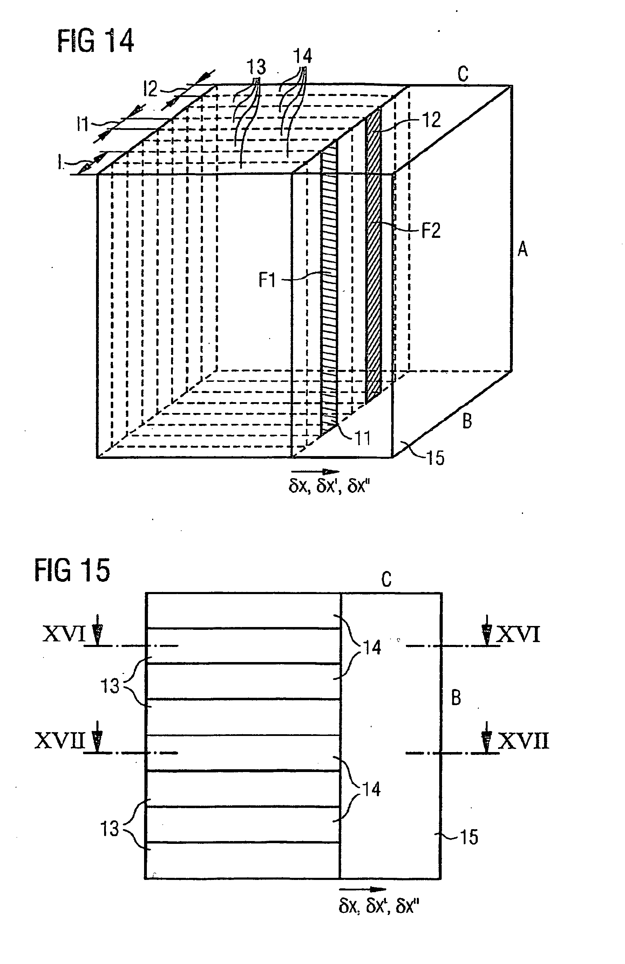

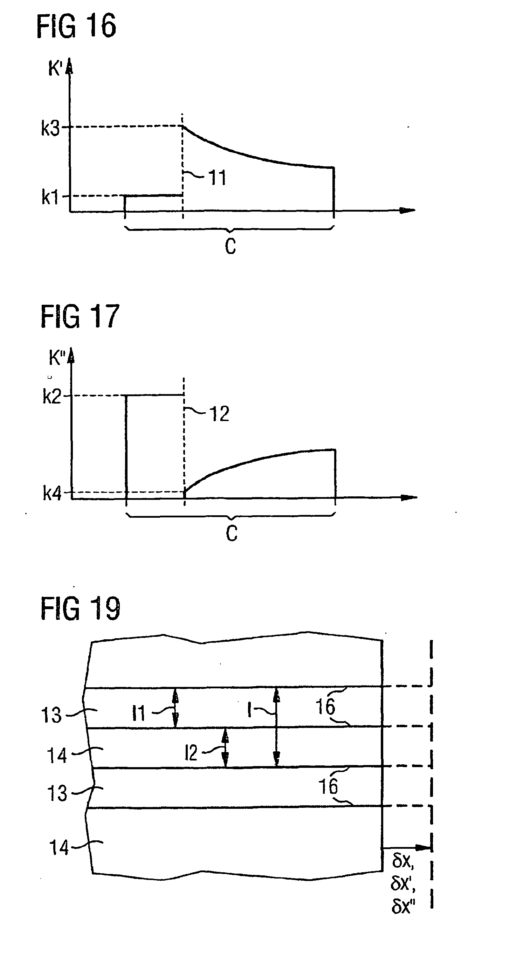

Wenn hingegen im Schritt S28 festgestellt wurde, dass alle drei Phasen vorliegen bzw. vorliegen könnten, ergibt sich ein komplizierteres Problem. Denn dann muss der Ansatz gewählt werden, dass eine Schichtstruktur existiert, die - siehe FIG 14 und 15 - abwechselnd aus einer Ferritschicht 13 und einer Zementitschicht 14 besteht. Die Schichtstruktur grenzt an einen austenitischen Bereich 15 an. Die FIG 16 und 17 zeigen jeweils einen Verlauf der Konzentration K' bzw. K" des beweglichen Legierungselements in einer Ferritschicht 13 bzw. einer Zementitschicht 14 und im austenitischen Bereich 15 vor diesen Schichten 13, 14.

Im Rahmen des Modells wird dabei nach wie vor angenommen, dass die Phasengrenzen 11, 12 als Rechtecke ausgebildet sind, die jeweils eine Längsseite und eine Querseite aufweisen. Die Längsseiten korrespondieren weiterhin mit der ersten Grundabmessung A. Die Querseiten verlaufen nach wie vor parallel zur zweiten Grundabmessung B. Auch wird nach wie vor angenommen, dass Verschiebungen der Phasengrenzen 11, 12 parallel zur dritten Grundabmessung C erfolgen.

Für jede der Phasengrenzen 11 und 12 wird nunmehr in einem Schritt S30 ein Stefan-Problem angesetzt und gelöst. Der Schritt S30 ist in FIG 18 detaillierter dargestellt.

Das Stefan-Problem für die Phasengrenze 11 zwischen Ferrit und Austenit gehorcht gemäß FIG 18, siehe dort Schritt S31, folgender Gesetzmäßigkeit:

$$K'_t - DK'_{xx} = L1 \qquad (5)$$

K' ist dabei die Konzentration des beweglichen Legierungselements vor der Phasengrenze 11.

Das Stefan-Problem für die Phasengrenze 12 zwischen Zementit und Austenit gehorcht folgender Gesetzmäßigkeit:

$$K''_t - DK''_{xx} = L2 \qquad (6)$$

K" ist dabei - analog zu K' - die Konzentration des beweglichen Legierungselements vor der Phasengrenze 12.

L1 und L2 sind Kopplungsterme. Sie sind - siehe FIG 14 - Funktionen eines Lamellenabstands 1 der Schichtstruktur und eines Anteils q der Zementitphase an der Schichtstruktur sowie dessen zeitlicher Ableitung. Ausgeschrieben können sie z. B. lauten:

$$L1 = \frac{1}{q^2 - q - 1}\left(\frac{48qD}{l^2} - q_t(1-q)(3q+1)\right) \qquad \text{und} \qquad (7)$$

$$L2 = \frac{1}{q^2 - q - 1}\left(\frac{48(1-q)D}{l^2} - q_t\, q(3q-4)\right) \qquad (8)$$

Wie aus den Gleichungen 5 bis 8 ersichtlich ist, sind die beiden Stefan-Probleme auf Grund der Kopplungsterme L1, L2 auf der rechten Seite der Gleichungen 5 und 6 miteinander gekoppelt.

Auch in den Gleichungen 5 bis 8 stehen die Indizes t und x wieder für die Ableitung nach der Zeit bzw. dem Ort in Verschieberichtung der Phasengrenze 11 bzw. 12.

Für die Verschiebungen δx', δx" der Phasengrenzen 11, 12 gelten weiterhin die Stefan-Bedingungen (siehe Gleichungen 3 und 4). Es ist daher möglich, die Verschiebungen δx', δx" gemäß den Gleichungen 3 und 4 in einem Schritt S32 gleichzusetzen. Dann ist der Anteil q derart zu bestimmen, dass die Verschiebung δx' der Phasengrenze 11 gemäß Gleichung 3 und die Verschiebung δx" der Phasengrenze 12 gemäß Gleichung 4 denselben Wert annehmen. Der Anteil q ist in diesem Fall also derart zu bestimmen, dass die Phasengrenzen 11, 12 stets nebeneinander angeordnet bleiben.

Die Gleichheit der Verschiebungen δx', δx" der Phasengrenzen 11, 12 kann also dadurch erreicht werden, dass der Anteil q der Zementitphase an der Schichtstruktur des Perlit geeignet gewählt wird. Man kann also - z. B. durch Einsetzen und Ausrechnen (trial and error) - ermitteln, bei welchem Anteil q der Zementitphase die Verschiebungen δx', δx" der Phasengrenzen 11, 12 übereinstimmen.

Anhand des so ermittelten Anteils q lässt sich dann auch bestimmen, ob tatsächlich Perlit gebildet wird oder ob nur eine der beiden Phasen Ferrit und Zementit gebildet wird. Denn nur wenn der Anteil q zwischen Null und Eins liegt, wird Perlit gebildet. Ist der Anteil q hingegen größer als Eins, wird ausschließlich Zementit gebildet. Ist er umgekehrt kleiner als Null, wird ausschließlich Ferrit gebildet.

Der Anteil q kann bei dieser Vorgehensweise aus numerischen Gründen beliebige Werte annehmen, also insbesondere auch kleiner als Null oder größer als Eins sein. Diese Werte sind aber physikalisch sinnlos. Der Anteil q wird daher in Schritten S33 bis S36 gegebenenfalls entsprechend korrigiert.

Die Vorgehensweise gemäß Schritt 32 kann zu numerischen Problemen führen. Alternativ ist es daher möglich, unterschiedliche Verschiebungen δx', δx" zuzulassen. In diesem Fall wird der Anteil q des Zementit an der Schichtstruktur gemäß

$$q_t = \alpha\, \frac{\delta x" - \delta x'}{l\delta t} \qquad (9)$$

in Schritten S32a und S32b derart nachgeführt, dass die Lagen der Phasengrenzen 11, 12 aufeinander zustreben. Die Schritte S32a und S32b werden dabei gemäß FIG 18 anstelle des Schrittes S32 ausgeführt. α ist eine geeignete Proportionalitätskonstante. Ihr Wert ist größer als Null.

In diesem Fall wird eine mittlere Verschiebung δx der Phasengrenzen 11, 12 zu

$$\delta x = (1-q)\delta x' + q\delta x" \qquad (10)$$

definiert.

Unabhängig davon, welche dieser beiden Vorgehensweisen (Schritt S32 oder Schritte S32a, S32b) ergriffen wird, wird aber in beiden Fällen erst durch die Bestimmung des Anteils q ermittelt und abgeleitet, welche Phasen in welchem Umfang gebildet werden.

Wenn Perlit gebildet wird, der Anteil q also zwischen Null und Eins liegt, muss noch der Lamellenabstand 1 bestimmt werden. Dies geschieht gemäß FIG 19 wie folgt:

Mit der Verschiebung δx der Phasengrenzen 11, 12 und dem Anteil q ist bekannt, welche Phasenumwandlungen erfolgen und in welchen Anteilen sie erfolgen. Die Phasenumwandlungen liefern einen Beitrag δE1 zur Energiebilanz. Der Beitrag δE1 ist von dem Volumen abhängig, in dem die Phasenumwandlungen erfolgen. Es gilt also

$$\delta E1 = \beta A1 \delta x \qquad\qquad (11)$$

$\beta$ ist dabei eine vorab ermittelbare Proportionalitätskonstante.

Es ergibt sich ferner eine Änderung der Fläche einer Grenzschicht 16 zwischen Ferrit und Zementit. Auch die Änderung dieser Fläche liefert einen Beitrag $\delta E2$ zur Energiebilanz. Dieser Beitrag $\delta E2$ ist proportional zur Änderung der Fläche der Grenzschicht 16. Es gilt also

$$\delta E2 = 2\gamma A \delta x \qquad\qquad (12)$$

$\gamma$ ist dabei wieder eine vorab ermittelbare Proportionalitätskonstante. Der Faktor 2 ergibt sich dadurch, dass pro Phasengrenze 11, 12 bzw. pro Schicht 13, 14 je eine Grenzschicht 16 vorhanden ist und zwei Phasengrenzen 11, 12 bzw. zwei Schichten 13, 14 betrachtet werden.

Anhand der Gleichungen 11 und 12 lässt sich somit ein kritischer Lamellenabstand 1' ermitteln, bei dem die Energiebilanz, welche die beiden Beiträge $\delta E1$ und $\delta E2$ berücksichtigt, ausgeglichen ist. Für diesen kritischen Lamellenabstand 1' gilt

$$1' = 2\gamma / \beta \ . \qquad\qquad (13)$$

Der Lamellenabstand 1, also die Summe der Schichtdicken 11 und 12, wird nun auf das ca. eineinhalb- bis dreifache dieses kritischen Lamellenabstand 1' gesetzt, z. B. auf das ca. zweifache. Die Schichtdicken 11 bzw. 12 ergeben sich dann zu

$$l1 = (1 - q)l \qquad \text{und} \qquad (14)$$

$$l2 = ql \qquad\qquad (15)$$

Die Schichtdicken 11, 12 sind proportional zu Flächenmaßen F1, F2, welche die Phasengrenzen 11, 12 aufweisen. Je eines der Flächenmaße F1, F2 ist in FIG 14 durch Schraffieren entsprechend hervorgehoben.

Wenn in einem der Schritte S29, S30 eine Verschiebung 8x', $\delta x''$ einer Phasengrenze 11, 12, ermittelt wurde, hat sich somit die Lage der Phasengrenze 11, 12 geändert. In diesem Fall wird in einem Schritt S37 (selbstverständlich unter Beachtung des Vorzeichens der mittleren Verschiebung $\delta x$) eine neue Lage der Phasengrenzen 11, 12 oder 11 und 12 bestimmt. In einem Schritt S38 wird dann anhand einer nicht linearen Funktion der Lage der Phasengrenze 11, 12 bzw. der Phasengrenzen 11, 12 der Anteil p3 des Austenits ermittelt. Die nicht lineare Funktion berücksichtigt dabei insbesondere den Umstand, dass das Stefan-Problem des Schrittes S29 bzw. die Stefan-Probleme des Schrittes S30 eindimensional angesetzt und gelöst wurden, in der Realität aber eine dreidimensionale Umwandlung erfolgt.

In einem Schritt S39 werden sodann die Änderungen der Anteile p1, p2 der beiden anderen Phasen Ferrit und Zementit bestimmt. Falls dabei die Schritte S37 bis S39 vom Schritt S29 aus erreicht werden, ist selbstverständlich der Anteil q Null oder Eins.

Mit der mittleren Verschiebung $\delta x$ der Phasengrenzen 11, 12 und dem Anteil q des Zementit an der Schichtstruktur ($0 < q < 1$) lässt sich also auf einfache Weise ermitteln, welche Änderungen sich für die Anteile p1, p2, p3 der Phasen des Stahls bezüglich des betrachteten Volumenelements 9 ergeben.

Trotz der vereinfachenden Annahmen des obigen Modellierverfahrens ergibt sich ein erheblicher Rechenaufwand. Daher werden gemäß FIG 8 vor dem Schritt S22 Schritte S40 und S41 und nach dem Schritt S39 ein Schritt S42 eingefügt.

Im Schritt S40 werden die Volumenelemente 9 zu Gruppen zusammen gefasst. Beispielsweise kann eine Zusammenfassung mehrerer Volumenelemente 9 erfolgen, die in Richtung der Bandbreite b, der Banddicke d und/oder der Bandgeschwindigkeit v aneinander angrenzen. Auch Kombinationen hiervon sind möglich. Im Schritt S41 wird dann pro Gruppe von Volumenelementen 9 je ein einziges der Volumenelemente 9 ausgewählt. Nur für die ausgewählten der Volumenelemente 9 werden in den Schritten S22 bis S39 die Differentialgleichung, das Stefan-Problem bzw. die Stefan-Probleme gelöst und die Anteile p1 p2, p3 der Phasen rechnerisch ermittelt.

Gemäß FIG 8 wird bei jeder Gruppe das Lösungsergebnis des betrachteten Volumenelements 9 im Schritt S42 für die anderen Volumenelemente 9 der jeweiligen Gruppe übernommen. Dies stellt die einfachste Vorgehensweise dar. Es wäre aber auch denkbar, die Anteile p1, p2, p3 der Phasen von Volumenelementen 9, deren Phasenverteilung nicht explizit berechnet worden ist, durch lineare oder nicht lineare Interpolation zu ermitteln.

Auf Grund dieses Umstands, nämlich dass bei jeder Gruppe von Volumenelementen 9 nur die Konzentrationsverteilung K eines der Volumenelemente 9 errechnet wird und für das Lösen der Wärmeleitungsgleichung nicht die Konzentrationsverteilung K, sondern nur die Anteile p1, p2, p3 der vorhandenen Phasen benötigt werden, kann gegebenenfalls auch die Konzentrationsverteilung K nur für dieses eine Volumenelement 9 jeder Gruppe vorgegeben werden.

Die Wärmeleitungsgleichung hingegen wird in einem Schritt S43 individuell für jedes der Volumenelemente 9 gelöst. Der Schritt S43 kann dabei alternativ vor oder nach dem Lösen der Phasenumwandlungsgleichung in den Schritten S22 bis S42 ausgeführt werden.

Das Lösen der Wärmeleitungsgleichung ist ohne Weiteres möglich. Denn die Temperaturen T der einzelnen Volumenelemente 9 sind - siehe obige Erläuterungen zum Schritt S22 - ohne Weiteres ermittelbar, so dass auch deren Ortsgradient sofort ermittelbar ist. Da auch die Anteile p1, p2, p3 der Phasen der einzelnen Volumenelemente 9 ebenfalls bekannt sind, lässt sich auch die Wärmeleitfähigkeit $\lambda$ der einzelnen Volumenelemente 9 ohne Weiteres ermitteln. Da schließlich die Dichte $\rho$ im Wesentlichen eine Konstante ist und die Enthalpie H der einzelnen Volumenelemente 9 direkt gegeben ist, ist somit auch die Wärmeleitungsgleichung als Ganzes lösbar.

Mittels der vorliegenden Erfindung wird also ein physikalischen Modell erstellt, bei dem auf Basis der Gibbsschen freien Enthalpie G und des Diffusionsgesetzes (Stefan-Problem) das Umwandlungsgeschehen hinsichtlich entstehender Phasenanteile p1, p2, p3 und Umwandlungsgeschwindigkeit mit sehr hoher Genauigkeit beschreibbar ist. Es werden allgemein gültige Ergebnisse ermöglicht, welche auch die Behandlung noch unbekannter Materialien und Werkstoffe erlauben. Die Ansätze sind darüber hinaus nicht nur zur Temperaturberechnung, sondern auch zur Berechnung von Gefügestruktur und Korngröße anwendbar.

Das erfindungsgemäße Modellierverfahren kann an beliebiger Stelle eingesetzt werden, also insbesondere beispielsweise auch bei Kühlvorgängen zwischen Walzgerüsten einer Walzstraße oder bei sogenanntem ferritischem Walzen. Es eignet sich auch zur Beschreibung der Rückumwandlung beim Aufheizen des Stahles.

**Patentansprüche**

**1.** Rechnergestütztes Modellierverfahren für das Verhalten eines Stahlvolumens (1) mit einer Volumenoberfläche,

a) wobei ein Rechner (4) anhand eines momentanen Anfangszustands (ZA) des Stahlvolumens (1) und mindestens einer über die Volumenoberfläche auf das Stahlvolumen (1) einwirkenden momentanen Einflussgröße (W) durch Lösen einer Wärmeleitungsgleichung und einer Phasenumwandlungsgleichung einen Folgezustand (ZF) des Stahlvolumens (1) ermittelt,

b) wobei die mindestens eine Einflussgröße (W) für eine Anzahl von Flächenelementen (10) der Volumenoberfläche jeweils einen lokalen Einfluss umfasst und die lokalen Einflüsse über das jeweilige Flächenelement (10) auf das Stahlvolumen (1) einwirken,

c) wobei der Anfangszustand (ZA) und der Folgezustand (ZF) für eine Anzahl von Volumenelementen (9) des Stahlvolumens (1) jeweils lokale Anteile (p1, p2, p3) von modellierten Phasen des Stahls und eine einen lokalen Energieinhalt des Stahls beschreibende Größe (H) umfassen,

d) wobei die modellierten Phasen des Stahls Austenit und eine erste weitere Phase umfassen,

e) wobei die erste weitere Phase Ferrit oder Zementit ist,

f) wobei der Anfangszustand (ZA) und der Folgezustand (ZF) für mindestens eines der Volumenelemente (9) auch eine lokale Konzentrationsverteilung (K) mindestens eines im Stahl beweglichen Legierungselements umfassen,

g) wobei im Rahmen der Umwandlungsgleichung für das mindestens eine Volumenelement (9) ermittelt wird, welche Konzentrationen (k1, k3; k2, k4) des mindestens einen beweglichen Legierungselements beidseits einer ersten Phasengrenze (11, 12) zwischen Austenit und der ersten weiteren Phase vorliegen,

h) wobei durch Lösen eines ersten Stefan-Problems ermittelt wird, ob und wie sich die Konzentrationsverteilung (K) des mindestens einen beweglichen Legierungselements im austenitischen Bereich des betrachteten Volumenelements (9) ändert und ob und um welches Ausmaß ($\delta x$, $\delta x'$, $\delta x''$) sich die erste Phasengrenze (11, 12) dadurch verschiebt,

i) wobei die lokalen Anteile (p1, p2, p3) der Phasen anhand einer durch das Ausmaß ($\delta x$) der Verschiebung der ersten Phasengrenze (11, 12) bestimmten Lage der ersten Phasengrenze (11, 12) ermittelt werden,

j) wobei das Modellierverfahren online und in Echtzeit ausgeführt wird,

k) wobei der Rechner (4) anhand einer aus dem Anfangszustand (ZA) ermittelten Anfangsgröße (f) und einer gewünschten Folgegröße (f*) die Einflussgröße (W) ermittelt,

l) wobei der Rechner (4) eine Beeinflussungseinrichtung (2) derart ansteuert, dass das Stahlvolumen (1) entsprechend der ermittelten Einflussgröße (W) beeinflusst wird,

m) wobei das Modellierverfahren nach den Merkmalen a) bis l) iterativ angewendet wird und

n) wobei der Anfangszustand (ZA) jeder weiteren Iteration dem unmittelbar zuvor ermittelten Folgezustand (ZF) entspricht.

2. Modellierverfahren nach Anspruch 1,
**dadurch gekennzeichnet,**

- **dass** die modellierten Phasen des Stahls auch eine zweite weitere Phase umfassen, in die Austenit umwandelbar ist und die in Austenit umwandelbar ist,
- **dass** für das betrachtete Volumenelement (9) im Rahmen der Umwandlungsgleichung auch ermittelt wird, welche Konzentrationen (k2, k4; k1, k3) des mindestens einen beweglichen Legierungselements beidseits einer zweiten Phasengrenze (12, 11) zwischen Austenit und der zweiten weiteren Phase vorliegen,
- **dass** durch zusätzliches Lösen eines zweiten Stefan-Problems ermittelt wird, ob und wie sich die Konzentrationsverteilung (K) des mindestens einen beweglichen Legierungselements im austenitischen Bereich des betrachteten Volumenelements (9) ändert und ob und um welches Ausmaß ($\delta x''$, $\delta x'$) sich die zweite Phasengrenze (12, 11) dadurch verschiebt,
- **dass** die Stefan-Probleme miteinander gekoppelt sind,
- **dass** den Phasengrenzen (11, 12) Flächenmaße (F1, F2) zugeordnet sind,
- **dass** ein Anteil (q) des der zweiten Phasengrenze (12) zugeordneten Flächenmaßes (F2) an der Summe der Flächenmaße (F1, F2) bestimmt wird und
- **dass** die lokalen Anteile (p1, p2, p3) auch vom Anteil (q) des der zweiten Phasengrenze (12) zugeordneten Flächenmaßes (F2) an der Summe der Flächenmaße (F1, F2) abhängen.

3. Modellierverfahren nach Anspruch 2,
**dadurch gekennzeichnet, dass** der Anteil (q) des der zweiten Phasengrenze (12) zugeordneten Flächenmaßes (F2) an der Summe der Flächenmaße (F1, F2) derart bestimmt wird, dass die Phasengrenzen (11, 12) stets nebeneinander angeordnet bleiben.

4. Modellierverfahren nach Anspruch 2,
**dadurch gekennzeichnet, dass** der Anteil (q) des der zweiten Phasengrenze (12) zugeordneten Flächenmaßes (F2) an der Summe der Flächenmaße (F1, F2) derart nachgeführt wird, dass die Phasengrenzen (11, 12) aufeinander zu streben.

5. Modellierverfahren nach Anspruch 2, 3 oder 4,
**dadurch gekennzeichne**, dass anhand des Anteils (q) des der zweiten Phasengrenze (12) zugeordneten Flächenmaßes (F2) an der Summe der Flächenmaße (F1, F2) abgeleitet wird, ob Austenit nur in die erste weitere Phase, nur in die zweite weitere Phase oder sowohl in die erste als auch in die zweite weitere Phase umgewandelt wird.

6. Modellierverfahren nach einem der obigen Ansprüche,
**dadurch gekennzeichnet,**

- **dass** das betrachtete Volumenelement (9) quaderförmig ausgebildet ist und drei Grundabmessungen (A, B, C) aufweist,
- **dass** die erste Phasengrenze (11, 12) als Rechteck mit einer ersten Längsseite und einer ersten Querseite ausgebildet ist und
- **dass** die erste Längsseite mit einer ersten der Grundabmessungen (A, B, C) korrespondiert, die erste Querseite parallel zu einer zweiten der Grundabmessungen (A, B, C) verläuft und Verschiebungen ($\delta x'$, $\delta x''$) der ersten Phasengrenze (11, 12) parallel zu der dritten der Grundabmessungen (A, B, C) erfolgen.

7. Modellierverfahren nach Anspruch 6 und einem der Ansprüche 2 bis 5,
**dadurch gekennzeichnet,**

- **dass** die zweite Phasengrenze (12, 11) als Rechteck mit einer zweiten Längsseite und einer zweiten Querseite ausgebildet ist und

- **dass** die zweite Längsseite mit der ersten der Grundabmessungen (A, B, C) korrespondiert, die zweite Querseite parallel zur zweiten der Grundabmessungen (A, B, C) verläuft und Verschiebungen ($\delta x''$, $\delta x'$) der zweiten Phasengrenze (12, 11) parallel zur dritten der Grundabmessungen (A, B, C) erfolgen.

8. Modellierverfahren nach Anspruch 7,
   **dadurch gekennzeichnet, dass** die Summe (l) der Querseiten der Phasengrenzen (11, 12) ungefähr gleich dem 1,5- bis 3-fachen eines kritischen Lamellenabstandes (l') ist, bei dem eine Energiebilanz, die einerseits mit dem Verschieben der Phasengrenzen (11, 12) korrespondierende Phasenumwandlungen des Stahls und andererseits mit dem Verschieben der Phasengrenzen (11, 12) korrespondierende Änderungen der Fläche einer Grenzschicht (16) zwischen der ersten und der zweiten weiteren Phase berücksichtigt, ausgeglichen ist.

9. Modellierverfahren nach einem der obigen Ansprüche,
   **dadurch gekennzeichnet, dass** das Stefan-Problem eindimensional angesetzt und gelöst wird bzw. die Stefan-Probleme eindimensional angesetzt und gelöst werden und dass der Anteil (p3) an Austenit anhand einer nicht linearen Funktion der Lage der Phasengrenze (11, 12) bzw. der Phasengrenzen (11, 12) ermittelt wird.

10. Modellierverfahren nach einem.der obigen Ansprüche,
    **dadurch gekennzeichnet, dass** die Ermittlung, in welchen Konzentrationen (k1 bis k4) das mindestens eine bewegliche Legierungselement beidseits der ersten Phasengrenze (11, 12) bzw. beidseits der ersten und beidseits der zweiten Phasengrenze (11, 12) vorliegt, anhand der Gibbsschen freien Enthalpien (G1, G2, G3) der Phasen erfolgt.

11. Modellierverfahren nach einem der obigen Ansprüche,
    **dadurch gekennzeichnet, dass** anhand der im Anfangszustand (ZA) bereits vorhandenen Phasen und anhand der Gibbsschen freien Enthalpien (G1, G2, G3) der Phasen ermittelt wird, ob sowohl Austenit als auch die erste weitere Phase vorliegen bzw. ob zusätzlich zu Austenit und der ersten weiteren Phase auch die zweite weitere Phase vorliegt.

12. Modellierverfahren nach einem der obigen Ansprüche,
    **dadurch gekennzeichnet, dass** das Stahlvolumen (1) eine Vielzahl von Volumenelementen (9) umfasst, dass das Stefan-Problem bzw. die Stefan-Probleme nur für einen Teil der Volumenelemente (9) gelöst wird bzw. werden und dass die lokalen Anteile (p1, p2, p3) der Phasen der anderen Volumenelemente (9) anhand der lokalen Anteile (p1, p2, p3) der Phasen des Teils der Volumenelemente (9) ermittelt werden.

13. Modellierverfahren nach Anspruch 12,
    **dadurch gekennzeichnet, dass** die Wärmeleitungsgleichung individuell für jedes Volumenelement (9) gelöst wird.

14. Beeinflussungseinrichtung zum Beeinflussen der Temperatur eines Stahlvolumens (1), wobei die Beeinflussungseinrichtung einen die Beeinflussungseinrichtung steuernden Rechner (4) aufweist, wobei der Rechner einen Massenspeicher (8) aufweist, in dem ein Computerprogramm (6), umfassend Programmcode-Mittel zur Durchführung aller Schritte eines Modellierverfahrens nach einem der Ansprüche 1 bis 13 hinterlegt ist, so dass bei Aufruf des Computerprogramms (6) von dem Rechner ein Modellierverfahren mit allen Schritten nach einem der Ansprüche 1 bis 13 ausgeführt wird.

**Claims**

1. Computer-assisted modelling method for the behaviour of a steel volume (1) with a volumetric surface,

   a) in which a computer (4), on the basis of an instantaneous initial state (ZA) of the steel volume (1) and at least one instantaneous influence quantity (W) operating via the volumetric surface on the steel volume (1), by resolving a thermal conduction equation and a phase change equation, determines a subsequent state (ZF) of the steel volume (1),
   b) in which the at least one influence quantity (W) includes one local influence for a number of surface elements (10)) of the volumetric surface in each case and the local influences operate via the relevant surface element (10) on the steel volume (1),
   c) in which the initial state (ZA) and the subsequent state (ZF) for a number of volume elements (9) of the steel volume (1) comprise local proportions (p1, p2, p3) of modelled phases of the steel and a quantity (H) describing a local energy content of the steel in each case,

d) in which the modelled phases of the steel comprise austenite and a first further phase,

e) in which the first further phase is ferrite or cementite,

f) in which the initial state (ZA) and the subsequent state (ZF) for at least one of the volume elements (9) also comprise a local distribution in concentration (K) of at least one mobile alloy element in the steel,

g) in which, within the context of the change equation, it is determined for the at least one volume element (9) which concentrations (k1, k3; k2, k4) of the at least one mobile alloy element are present on both sides of a first phase boundary (11, 12) between austenite and the first further phase,

h) in which, by resolving a first Stefan problem, it is determined whether and how the distribution in concentration (K) of the at least one mobile alloy element changes in the austenitic zone of the volume element (9) observed and whether and to what extent ($\delta x$, $\delta x'$, $\delta x''$) the first phase boundary (11, 12) is displaced thereby,

i) in which the local proportions (p1, p2, p3) of the phases are determined on the basis of the position of the first phase boundary (5, 5) defined by the extent ($\delta x$) of the displacement of the first phase boundary (11, 12),

j) in which the modelling method is executed online and in real time,

k) in which the computer (4) determines the influence quantity (W) on the basis of an initial quantity (f) determined from the initial state (ZA) and a desired subsequent quantity (f*),

l) in which the computer (4) controls an influencing device (2) such that the steel volume (1) is influenced in accordance with the influence quantity (W) determined,

m) in which the modelling method is applied iteratively in accordance with the features a) to l),

n) in which the initial state (ZA) of each further iteration corresponds to the subsequent state (ZF) determined immediately beforehand.

2. Modelling method according to claim 1,
   **characterised in that**

   - the modelled phases of the steel also comprise a second further phase into which austenite can be changed and which can be changed into austenite.

   - for the volume element (9) observed, it is also determined within the context of the change equation which concentrations (k2, k4; k1, k3) of the at least one mobile alloy element are present on both sides of a second phase boundary (12, 11) between austenite and the second further phase,
   - through additional resolution of a second Stefan problem it is determined whether and how the distribution in concentration (K) of the at least one mobile alloy element changes in the austenitic zone of the volume element (9) observed and whether and to what extent ($\delta x''$, $\delta x'$) the second phase boundary (12, 11) is displaced by this,

   - the Stefan problems are coupled to each other,
   - square measures (F1, F2) are assigned to the phase boundaries (11, 12),
   - a proportion (q) of the square measure (F2) assigned to the second phase boundary (12) is determined from the sum of the square measures (F1, F2) and
   - the local proportions (p1, p2, p3) also depend on the proportion (q) of the square measure (F2) assigned to the second phase boundary (12) in the sum of the square measures (F1, F2).

3. Modelling method according to claim 2,
   **characterised in that** the proportion (q) of the square measure (F2) assigned to the second phase boundary (12) in the sum of the square measures (F1, F2) is determined such that the phase boundaries (11, 12) always remain arranged alongside one another.

4. Modelling method according to claim 2,
   **characterised in that,** the proportion (q) of the square measure (F2) assigned to the second phase boundary (12) in the sum of the square measures (F1, F2) is adjusted such that the phase boundaries (11, 12) move towards each other.

5. Modelling method according to claim 2, 3, or 4,
   **characterised in that**, on the basis of the proportion (q) of the square measure (F2) assigned to the second phase boundary (12) of the sum of the square measures (F1, F2) it is deduced whether austenite changes only in the first further phase, only in the second further phase or both in the first and also in the second further phase.

6. Modelling method according to one of the above claims,
   **characterised in that**

   - the volume element (9) observed is embodied as a cuboid and has three basic dimensions (A, B, C),
   - the first phase boundary (11, 12) is embodied as a rectangle with a first longitudinal side and a first transverse side and
   - the first longitudinal side corresponds to one of the first basic dimensions (A, B, C), the first transverse side runs in parallel to a second of the basic dimensions (A, B, C) and displacements ($\delta x'$, $\delta x''$) of the first phase boundary (11, 12) occur in parallel to the third of the basic dimensions (A, B, C).

7. Modelling method according to claim 6 and one of the claims 2 to 5,
   **characterised in that,**

   - the second phase boundary (12, 11) is embodied as a rectangle with a second longitudinal side and a second transverse side and
   - the second longitudinal side corresponds to the first of the basic dimensions (A, B, C), the second transverse side runs in parallel to the second of the basic dimensions (A, B, C) and displacements ($\delta x''$, $\delta x'$) of the second phase boundary (12, 11) occur in parallel to the third of the basic dimensions (A, B, C).

8. Modelling method according to claim 7,
   **characterised in that** the sum (1) of the transverse sides of the phase boundaries (11, 12) is roughly the same as 1.5 to 3 times a critical lamella spacing (1'), in which an energy balance is undertaken which takes account on the one hand of the phase changes of the steel corresponding to the displacement of the phase boundaries (11, 12) and on the other hand takes account of the changes in the surface of a boundary layer (16) between the first and the second further phase corresponding to the displacement of the phase boundaries (11, 12).

9. Modelling method according to one of the above claims,
   **characterised in that,** the Stefan problem is formulated and resolved in one dimension and or the Stefan problems are formulated and resolved in one dimension and that the proportion (p3) of austenite is determined on the basis of a non-linear function of the position of the phase boundary (11, 12) or the phase boundaries (11, 12).

10. Modelling method according to one of the above claims,
    **characterised in that** the concentrations (k1 to k4) in which the at least one mobile alloy element is present on both sides of the first phase boundary (11, 12) or on both sides of the first and both sides of the second phase boundary (11, 12) are determined on the basis of the Gibbs free enthalpies (G1, G2, G3) of the phases.

11. Modelling method according to one of the above claims,
    **characterised in that** on the basis of the phases already present in the initial state (ZA) and on the basis of the Gibbs free enthalpies (G1, G2, G3) of the phases, it is determined whether both austenite and also the first further phase are present or whether in addition to austenite and the first further phase, the second further phase is also present.

12. Modelling method according to one of the above claims,
    **characterised in that** the steel volume (1) comprises a multiple of the volume elements (9), that the Stefan problem or the Stefan problems are only resolved for a part of the volume elements (9) and that the local proportions (p1, p2, p3) of the phases of the other volume elements (9) are determined on the basis of the local proportions (p1, p2, p3) of the phases of the part of the volume elements (9).

13. Modelling method according to claim 12, **characterised in that** the thermal conductance equation is resolved individually for each volume element (9).

14. Influencing device for influencing the temperature of a steel volume (1), where the influencing device features a computer (4) controlling the influencing device, wherein the computer has mass storage (8), in which a computer program (6) comprising program code means for executing all steps of a modelling method according to one of the claims 1 to 13 is stored, so that when the computer program (6) is called by the computer, a modelling method with all steps according to one of the claims 1 to 13 can be executed.

**Revendications**

1. Procédé de modélisation assisté par ordinateur pour le comportement d'un volume d'acier ( 1 ) ayant une surface :

   a ) dans lequel, à l'aide d'un état initial instantané ( ZA ) du volume d'acier ( 1 ) et d'au moins une grandeur d'influence instantanée ( W ) agissant sur le volume d'acier ( 1 ) par l'intermédiaire de la surface du volume, un ordinateur ( 4 ) détermine un état suivant ( ZF ) du volume d'acier ( 1 ) en résolvant une équation de conduction thermique et une équation de transformation de phase,
   b ) dans lequel, la au moins une grandeur d'influence ( W ) comprend pour un certain nombre d'éléments de surface ( 10 ) de la surface du volume respectivement une influence locale et les influences locales agissent par l'intermédiaire de l'élément de surface respectif ( 10 ) sur le volume d'acier ( 1 ),
   c ) dans lequel, l'état initial ( ZA ) et l'état suivant ( ZF ) comprennent pour un certain nombre d'éléments de volume ( 9 ) du volume d'acier ( 1 ) respectivement des proportions locales ( p1, p2, p3 ) de phases modélisées de l'acier et une grandeur ( H ) décrivant un contenu énergétique local de l'acier,
   d ) dans lequel, les phases modélisées de l'acier comprennent de l'austénite et une autre phase,
   e ) dans lequel la première autre phase est de la ferrite ou de la cémentite,
   f ) dans lequel, l'état initial ( ZA ) et l'état suivant ( ZF ) comprennent aussi pour au moins l'un des éléments de volume ( 9 ) une répartition de concentration locale ( K ) d'au moins un élément d'addition mobile dans l'acier,
   g ) dans lequel, dans le cadre de l'équation de transformation, on détermine pour au moins un élément de volume ( 9 ) les concentrations ( k1, k3 ; k2, k4 ) du au moins un élément d'alliage mobile qui se trouvent des deux côtés d'une première limite de phase ( 11, 12 ) entre l'austénite et la première autre phase,
   h ) dans lequel, en résolvant un premier problème de Stefan, on détermine si et comment la répartition de concentration ( K ) du au moins un élément d'alliage mobile varie dans la zone d'austénite de l'élément ( 9 ) de volume considéré et si et dans quelle mesure ( $\delta x$, $\delta x'$, $\delta x''$ ) la première limite de phase ( 11, 12 ) se déplace ainsi,
   i ) dans lequel on détermine les proportions locales ( p1, p2, p3 ) des phases à l'aide d'une position de la première limite de phase ( 11, 12 ), laquelle position est définie par la mesure ( $\delta x$ ) du déplacement de la première limite de phase ( 11, 12 ),
   j ) dans lequel, le procédé de modélisation est exécuté en ligne et en temps réel,
   k ) dans lequel, l'ordinateur ( 4 ) détermine la grandeur d'influence ( W ) à l'aide d'une grandeur initiale ( f ) déterminée à partir de l'état initial ( ZA ) et d'une grandeur suivante souhaitée ( f* ),
   l ) dans lequel l'ordinateur ( 4 ) commande un dispositif de contrôle ( 2 ) de telle sorte que le volume d'acier ( 1 ) soit influencé conformément à la grandeur d'influence déterminée ( W ),
   m ) dans lequel, on applique itérativement le procédé de modélisation suivant les caractéristiques a ) à l ) et
   n ) dans lequel l'état ( ZA ) initial de chaque autre itération correspond à l'état ( ZF ) suivant déterminé juste avant.

2. Procédé de modélisation selon la revendication 1,
   **caractérisé**

   - **en ce que** les phases modélisées de l'acier comprennent aussi une deuxième autre phase, l'austénite étant transformable en cette deuxième autre phase et cette deuxième autre phase étant transformable en austénite,
   - **en ce que**, pour l'élément ( 9 ) de volume considéré, on détermine aussi dans le cadre de l'équation de transformation les concentrations ( k2, k4 ; k1, k3 ) du au moins un élément d'alliage mobile, qui se trouvent des deux côtés d'une deuxième limite de phase ( 12, 11 ) entre l'austénite et la deuxième autre phase,
   - **en ce que**, en résolvant en plus un deuxième problème de Stefan, on détermine si et comment la répartition de concentration ( K ) du au moins un élément d'alliage mobile varie dans la zone d'austénite de l'élément ( 9 ) de volume considéré et si et dans quelle mesure ( $\delta x''$, $\delta x'$ ) la deuxième limite de phase ( 12, 11 ) se déplace ainsi,
   - **en ce que** les problèmes de Stefan sont couplés l'un à l'autre,
   - **en ce que** des mesures de surface ( F1, F2 ) sont associées aux limites de phases ( 11, 12 ),
   - **en ce qu'**on détermine une proportion ( q ) de la mesure de surface ( F2 ) associée à la deuxième limite de phase ( 12 ) dans la somme des mesures de surface ( F1, F2 ), et
   - **en ce que** les proportions locales ( p1, p2, p3 ) dépendent aussi de la proportion ( q ) de la mesure de surface ( F2 ) associée à la deuxième limite de phase ( 12 ) dans la somme des mesures de surface ( F1, F2 ).

3. Procédé de modélisation selon la revendication 2,
   **caractérisé par le fait que** l'on détermine la proportion ( q ) de la mesure de surface ( F2 ) associée à la deuxième limite de phase ( 12 ) dans la somme des mesures de surface ( F1, F2 ) de telle sorte que les limites de phases ( 11, 12 ) restent toujours l'une à côté de l'autre.

**4.** Procédé de modélisation selon la revendication 2,
**caractérisé par le fait qu'**on fait évoluer la proportion ( q ) de la mesure de surface ( F2 ) associée à la deuxième limite de phase ( 12 ) dans la somme des mesures de surface ( F1, F2 ) de telle sorte que les limites de phases ( 11, 12 ) tendent l'une vers l'autre.

**5.** Procédé de modélisation selon la revendication 2, 3 ou 4,
**caractérisé par le fait que**, à l'aide de la proportion ( q ) de la mesure de surface ( F2 ) associée à la deuxième limite de phase ( 12 ) dans la somme des mesures de surface ( F1, F2 ), on déduit si de l'austénite est transformée seulement en la première autre phase, seulement en la deuxième autre phase ou aussi bien en la première autre phase qu'en la deuxième autre phase.

**6.** Procédé de modélisation selon l'une des revendications précédentes,
**caractérisé**

- **en ce que** l'élément ( 9 ) de volume considéré est en forme de parallélépipède et présente trois dimensions fondamentales ( A, B, C ),
- **en ce que** la première limite de phase ( 11, 12 ) est conçue comme un rectangle ayant un premier grand côté et un premier côté transversal et
- **en ce que** le premier grand côté correspond à une première dimension fondamentale ( A, B, C ), le premier côté transversal s'étend parallèlement à une deuxième dimension fondamentale ( A, B, C ) et des déplacements ( $\delta x'$, $\delta x''$ ) de la première limite de phase ( 11, 12 ) s'effectuent parallèlement à la troisième dimension fondamentale ( A, B, C ).

**7.** Procédé de modélisation selon la revendication 6 et selon l'une des revendications 2 à 5,
**caractérisé**

- **en ce que** la deuxième limite de phase ( 12, 11 ) est conçue comme un rectangle ayant un deuxième grand côté et un deuxième côté transversal, et
- **en ce que** le deuxième grand côté correspond à la première dimension fondamentale ( A, B, C ), le deuxième côté transversal s'étend parallèlement à la deuxième dimension fondamentale ( A, B, C ) et des déplacements ( $\delta x''$, $\delta x'$ ) de la deuxième limite de phase ( 12, 11 ) s'effectuent parallèlement à la troisième dimension fondamentale ( A, B, C ).

**8.** Procédé de modélisation selon la revendication 7,
**caractérisé par le fait que** la somme ( 1 ) des côtés transversaux des limites de phases ( 11, 12 ) est sensiblement égale à 1,5 à 3 fois une distance entre lamelles critique ( l' ) pour laquelle un bilan énergétique, qui prend en compte d'une part des transformations de phase de l'acier qui correspondent au déplacement des limites de phases ( 11, 12 ) et d'autre part des variations de la surface d'une couche limite ( 16 ) qui correspondent au déplacement des limites de phases ( 11, 12 ), est équilibré.

**9.** Procédé de modélisation selon l'une des revendications précédentes,
**caractérisé par le fait que** le problème de Stefan est posé et résolu dans une dimension ou les problèmes de Stefan sont posés et résolus dans une dimension et que la proportion ( p3 ) d'austénite est déterminée à l'aide d'une fonction non linéaire de la position de la limite de phase ( 11, 12 ) ou des limites de phases ( 11, 12 ).

**10.** Procédé de modélisation selon l'une des revendications précédentes,
**caractérisé par le fait que** la détermination des concentrations ( k1 à k4 ) dans lesquelles se trouve le au moins un élément d'alliage mobile des deux côtés de la première limite de phase ( 11, 12 ) ou des deux côtés de la première et des deux côtés de la deuxième limite de phase ( 11, 12 ) s'effectue à l'aide des enthalpies libres de Gibbs ( G1, G2, G3 ) des phases.

**11.** Procédé de modélisation selon l'une des revendications précédentes,
**caractérisé par le fait que**, à l'aide des phases déjà présentes dans l'état initial ( ZA ) et des enthalpies libres de Gibbs ( G1, G2, G3 ) des phases, on détermine s'il y a aussi bien de l'austénite que de la première autre phase ou s'il y a la deuxième autre phase en plus de l'austénite et de la première autre phase.

**12.** Procédé de modélisation selon l'une des revendications précédentes,
**caractérisé par le fait que** le volume d'acier ( 1 ) comprend un certain nombre d'éléments ( 9 ) de volume, que le problème de Stefan ou les problèmes de Stefan est résolu ou sont résolus seulement pour une partie des éléments ( 9 ) de volume et que l'on détermine les proportions locales ( p1, p2, p3 ) des phases des autres éléments ( 9 ) de volume à l'aide des proportions locales ( p1, p2, p3 ) des phases de la partie considérée des éléments ( 9 ) de volume.

**13.** Procédé de modélisation selon la revendication 12,
**caractérisé par le fait que** l'équation de conduction thermique est résolue individuellement pour chaque élément ( 9 )de volume.

**14.** Dispositif pour influencer la température d'un volume ( 1 ) d'acier, le dispositif ayant un ordinateur ( 4 ) le commandant, l'ordinateur ayant une mémoire de fond ( 8 ) dans laquelle est enregistré un programme informatique ( 6 ) comprenant des moyens formant code de programme en vue de la mise en oeuvre de toutes les étapes d'un procédé de modélisation selon l'une des revendications 1 à 13, de telle sorte que, lors de l'appel du programme informatique ( 6 ), un procédé de modélisation ayant toutes les étapes selon l'une des revendications 1 à 13 est exécuté par l'ordinateur.

## FIG 1

v, Z

f'*, f*

W

4

8

7

6

2

5 5

3 3

b

1

v

d

## FIG 2

1 9

10

9

## FIG 3

9

B

A

C

## FIG 4

steuere Kühlstrecke entsprechend dem ermittelten Einflussgrößenverlauf an — S11

## FIG 5

S12 — nimm entgegen Z
Z = Z(p1, p2, p3, H, K)

S13 — ZA = Z
t = t0

S14 — nimm entgegen
oder ermittle f*

S15 — ermittle f(ZA)

S16 — ermittle anhand von
f und f* W

S17 — steuere Kühlstrecke entsprechend an

S18 — bestimme anhand von ZA und W durch Lösen
der Wärmeleitungs- und der Phasenumwandlungsgleichung ZF
ZF = ZF(p1, p2, p3, H, K)

S19 — t = t + Δt

S20 — t = t1?

S21 — ZA = ZF

## FIG 6

$$\frac{\partial H}{\partial t} - div\left[\frac{\lambda H(p1,\, p2,\, p3)}{\rho} \cdot gradT\,(H,\, p1,\, p2,\, p3)\right] = 0$$

$$\frac{\partial p1}{\partial t} = f1\,(T,\, K);\quad \frac{\partial p2}{\partial t} = f2(T,\, K);\quad \frac{\partial p3}{\partial t} = f3(T,\, K);$$

ZA — →        → ZF

## FIG 7

$$\frac{\partial H}{\partial t} - \frac{\partial}{\partial x}\left[\frac{\lambda H(p1,\, p2,\, p3)}{\rho} \cdot \frac{\partial}{\partial x}T\,(H,\, p1,\, p2,\, p3)\right] = 0$$

$$\frac{\partial p1}{\partial t} = f1\,(T,\, K);\quad \frac{\partial p2}{\partial t} = f2(T,\, K);\quad \frac{\partial p3}{\partial t} = f3(T,\, K);$$

ZA — →        → ZF

FIG 8

FIG 9

FIG 10

## FIG 11

## FIG 12

## FIG 13

## FIG 14

$\delta x, \delta x', \delta x''$

## FIG 15

$\delta x, \delta x', \delta x''$

## FIG 16

## FIG 17

## FIG 19

# FIG 18

$$\text{löse } K'_t - DK'_{xx} = L1$$

$$\text{und } K''_t - DK''_{xx} = L2$$

$$\text{mit } L1 = \frac{1}{q^2 - q - 1}\left(\frac{48\, q\, D}{l^2} - q_t(1-q)(3q+1)\right)$$

$$\text{und } L2 = \frac{1}{q^2 - q - 1}\left(\frac{48\,(1-q)D}{l^2} - q_t\, q(3q-4)\right)$$

~S31

bestimme q derart, dass
gilt: $\delta x' = \delta x''$

S32

$$q_t = \alpha\, \frac{\delta x'' - \delta x'}{l\delta t}$$  ~S32a

$$q = q + q_t \cdot \delta t$$  ~S32b

= S30

S33
$q > 1?$

$-$

$+$

S34 — $q = 1$

S35
$q < 0?$

$-$

$+$

S36 — $q = 0$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10129565 A
- DE 10251716
- DE 10321792

**In der Beschreibung aufgeführte Nicht-Patentliteratur**

- Numerische Simulation der Wärmeleitung in Stahlblechen - Mathematik hilft bei der Steuerung von Kühlstrecken. **W. BORCHERS et al.** Unikurier. Friedrich-Alexander-Universität Erlangen-Nürnberg, Oktober 2001, , 27